# EUROPEAN PATENT SPECIFICATION

(11) **EP 4 492 132 B1**
(45) Date of publication and mention of the grant of the patent: **02.09.2026**
(21) Application number: 22969461.7
(22) Date of filing: 26.12.2022
(51) Int. Cl.: G02F 1/1362, G02F 1/1339

(54) **ARRAY SUBSTRATE AND MANUFACTURING METHOD THEREFOR, AND DISPLAY APPARATUS**
ARRAYSUBSTRAT UND HERSTELLUNGSVERFAHREN DAFÜR SOWIE ANZEIGEVORRICHTUNG
SUBSTRAT DE RÉSEAU ET SON PROCÉDÉ DE FABRICATION, ET APPAREIL D'AFFICHAGE

(43) Date of publication of application: 15.01.2025
(60) Divisional application: 26186490.4
(73) Proprietor: Boe Technology Group Co., Ltd., Beijing 100015 (CN); Fuzhou Boe Optoelectronics Technology Co., Ltd., Fuzhou, Fujian 350300 (CN)
(72) Inventor: HU, Pei, Beijing 100176 (CN); LIN, Xin, Beijing 100176 (CN); HU, Bo, Beijing 100176 (CN); LIN, Lifeng, Beijing 100176 (CN); WANG, Jianshu, Beijing 100176 (CN); LI, Chunyu, Beijing 100176 (CN); ZHOU, Rong, Beijing 100176 (CN)
(74) Representative: Cohausz & Florack
(86) International application number: PCT/CN2022/141878
(87) International publication number: WO 2024/138304

(56) References cited:
- WO-A1-2022/012227
- WO-A1-2022/198639
- WO-A1-2022/226768
- CN-A- 115 373 186
- US-A1- 2022 373 843
- US-A1- 2024 055 440

## Description

### Technical Field

The present disclosure relates to the field of display technology, and in particular to an array substrate, a manufacturing method therefor, and a display apparatus.

### Background

Thin film transistor liquid crystal display (TFT-LCD) has rapidly developed in recent years due to its small size, low power consumption, high image quality, no radiation, and portability. It has gradually replaced traditional cathode ray tube displays (CRT) and now dominates the current flat panel display market. Currently, TFT-LCD is widely used in products of various sizes, covering almost all major electronic products in today's information society, such as LCD TVs, high-definition digital TVs, computers (desktop and laptop), mobile phones, tablets, navigation systems, in-vehicle displays, projection displays, video cameras, digital cameras, electronic watches, calculators, electronic instruments, meters, public displays, and virtual displays.

In patent application US2022373843A1, an electrode structure and a display panel are disclosed. The electrode structure includes: first and second electrode portion and a conductive connection portion. The first electrode portion includes a first connection bar and first electrode bars. The first connection bar has a first side and a second side. The first electrode bars are located on the first side and connected to the first connection bar, and ends of adjacent first electrode bars away from the first connection bar are in an open shape. The second electrode portion includes a second connection bar and a second electrode bars. The second connection bar has a third side and a fourth side. The second electrode bars are located on the third side and connected to the second connection bar, and ends of adjacent second electrode bars away from the second connection bar are in an open shape. The display panel also comprises a plurality of data lines disposed at column gaps of the plurality of sub-pixel areas wherein at least part of the plurality of data lines comprise a widened portion for supporting a photo spacer; wherein a plurality of gate lines comprise an avoidance portion wrapped around the widened portion.

In patent application WO2022198639A, an array substrate is disclosed. The array substrate comprises: a first base substrate and a plurality of data line columns and a plurality of pixel groups formed on the first base substrate; the plurality of pixel groups are in array distributions along a row direction (X) and a column direction, and every pixel group comprises two subpixels arranged in the row direction; the color to which at least one subpixel corresponds in one group among any two adjacent pixel groups in the row direction is the same as the color to which to one subpixel of the other group corresponds; also, the colors to which any two adjacent subpixels in the row direction correspond are different; every data line column and every pixel group column are distributed in alternation in the row direction, every data line column is connected to each subpixel located in a same column and having a same corresponding color, and every data line column is connected to two subpixels having a same corresponding color among two pixel groups located at two sides adjacent to said data line column in the row direction. The present array substrate can improve a display effect.

### Summary

The present disclosure provides an array substrate, a manufacturing method therefor, and a display apparatus, the specific solutions are as follows. The invention is set out in appended claim 1.

On the one hand, the present disclosure provides an array substrate according to the claimed invention, including:
a base substrate, including a plurality of sub-pixel areas arranged in an array;
a plurality of data lines, disposed at column gaps of the plurality of sub-pixel area, where at least part of the plurality of data lines include a widened portion for supporting a photo spacer;
a plurality of gate lines and a plurality of common electrode lines, disposed at row gaps of the plurality of sub-pixel areas; where the plurality of gate lines and the plurality of common electrode lines are disposed on a different layer from the plurality of data lines, and at least one of at least part of the plurality of gate lines and at least part of the plurality of common electrode lines includes an avoidance portion wrapped around the widened portion.

In some embodiments and according to the claimed invention, in the array substrate provided by embodiments of the present disclosure, the at least part of the plurality of gate lines include a first avoidance portion wrapped around the widened portion, and the at least part of the plurality of common electrode lines include a second avoidance portion wrapped around the widened portion.

In some embodiments, in the array substrate provided by embodiments of the present disclosure, the plurality of sub-pixel areas include a plurality of red sub-pixel areas, a plurality of green sub-pixel areas, and a plurality of blue sub-pixel areas; where columns where the red sub-pixel areas are located, columns where the green sub-pixel areas are located, and columns where the blue sub-pixel areas are located are provided in alternating cycles in a row direction, and data lines at column gaps between the columns where the red sub-pixel areas are located and the columns where the blue sub-pixel areas are located include the widened portion.

In some embodiments, in the array substrate provided by embodiments of the present disclosure, an orthographic projection of the gate line on the base substrate includes a first boundary far away from an orthographic projection of the widened portion on the base substrate; and the array substrate further includes a plurality of pixel electrodes located in at least the plurality of sub-pixel areas; an orthographic projection of each pixel electrode on the base substrate includes a second boundary disposed close to the first boundary, and at least part of second boundaries are approximately parallel to an adjacent first boundary, respectively.

In some embodiments, in the array substrate provided by embodiments of the present disclosure, an orthographic projection of the common electrode line on the base substrate includes a third boundary far away from the orthographic projection of the widened portion on the base substrate; the orthographic projection of each pixel electrode on the base substrate includes a fourth boundary disposed close to the third boundary, and at least part of fourth boundaries are approximately parallel to an adjacent third boundary, respectively.

In some embodiments, in the array substrate provided by embodiments of the present disclosure, an area of an orthographic projection of the pixel electrode in the red sub-pixel area on the base substrate is Sr, an area of an orthographic projection of the pixel electrode in the green sub-pixel area on the base substrate is Sg, an area of an orthographic projection of the pixel electrode in the blue sub-pixel area on the base substrate is Sb, and a ratio of Sg:Sb:Sr is (881^{~}1635):(847^{~}1573):(843^{~}1565).

In some embodiments, in the array substrate provided by embodiments of the present disclosure, an orthographic projection of the pixel electrode in the green sub-pixel area on the base substrate does not overlap with an orthographic projection of the common electrode line on the base substrate; an orthographic projection of the pixel electrode in the red sub-pixel area on the base substrate and an orthographic projection of the pixel electrode in the blue sub-pixel area on the base substrate partially overlap with the orthographic projection of the common electrode line on the base substrate, respectively.

In some embodiments, in the array substrate provided by embodiments of the present disclosure, an area of the orthographic projection of the pixel electrode in the red sub-pixel area on the base substrate is Sr, an area of the orthographic projection of the pixel electrode in the green sub-pixel area on the base substrate is Sg, an area of the orthographic projection of the pixel electrode in the blue sub-pixel area on the base substrate is Sb, and a ratio of Sg:Sb:Sr is (909^{~}1687):(930^{~}1727):(946^{~}1758).

In some embodiments, in the array substrate provided by embodiments of the present disclosure, a difference between a charging rate of the red sub-pixel area and a charging rate of the green sub-pixel area is greater than or equal to 0 and less than 0.003, and a charging rate of the blue sub-pixel area is approximately same as the charging rate of the red sub-pixel area.

In some embodiments, in the array substrate provided by embodiments of the present disclosure, the array substrate further includes a plurality of transistors located at the row gaps of the plurality of sub-pixel areas; where: a distance between a transistor located between red sub-pixel areas and a transistor located between green sub-pixel areas is d₁; a distance between a transistor located between green sub-pixel areas and a transistor located between blue sub-pixel areas is d₂; a distance between a transistor located between blue sub-pixel areas and a transistor located between red sub-pixel areas is d₃; where d₂ <d₁ <d₃.

In some embodiments, in the array substrate provided by embodiments of the present disclosure, a shape of a channel area of the transistor is in a "straight line" shape, carriers in the channel area of the transistor migrate along a row direction, a width of the channel area of the transistor in the row direction is a; a local part of the gate line is multiplexed as a gate electrode of the transistor, and a line width of the gate electrode of the transistor in a column direction is A; where a/A is greater than or equal to 1/5 and less than or equal to 2/3.

In some embodiments, in the array substrate provided by embodiments of the present disclosure, the array substrate further includes: a transistor; a shape of a channel area of the transistor is in a "straight line" shape, carriers in the channel area of the transistor migrate along a column direction, a length of the channel area of the transistor in the column direction is b; a local part of the gate line is multiplexed as a gate electrode of the transistor, and a line width of the gate electrode of the transistor in the column direction is B; where b/B is greater than or equal to 1/6 and less than or equal to 3/5.

In some embodiments, in the array substrate provided by embodiments of the present disclosure, the array substrate further includes: a common electrode disposed on a side of a layer where the plurality of pixel electrodes are located facing away from the base substrate; a passivation layer disposed between the layer where the plurality of pixel electrodes are located and a layer where the common electrode is located; a planarization layer disposed between the layer where the plurality of pixel electrodes are located and a layer where the plurality of data lines are located; and a gate insulating layer disposed between the layer where the plurality of data lines are located and a layer where the plurality of gate lines are located; where the common electrode is electrically connected with the common electrode line through a first via hole penetrating through the passivation layer, the planarization layer and the gate insulating layer; a first electrode of the transistor is electrically connected with the pixel electrode through a second via hole penetrating through the planarization layer; and, in the column direction, a distance between the first via hole and an opening area of the sub-pixel area is greater than a distance between the second via hole and the opening area of the sub-pixel area.

In some embodiments, in the array substrate provided by embodiments of the present disclosure, the common electrode includes a plurality of slits in the sub-pixel area; and on a side close to the common electrode line, an end of each of the slits in the red sub-pixel area and the blue sub-pixel area is wrapped around the second avoidance portion.

In some embodiments, in the array substrate provided by embodiments of the present disclosure, on the side close to the common electrode line, at least some of ends of the slits in the green sub-pixel area are uneven.

In some embodiments, in the array substrate provided by embodiments of the present disclosure, a common electrode between two adjacent slits in the row direction is a strip electrode; the strip electrode includes a first domain portion extending in a first direction, a second domain portion extending in a second direction, and an articulating portion connected between the first domain portion and the second domain portion; the articulating portion protrudes in a direction far away from the first domain portion and the second domain portion; the first direction is crossed with the row direction and the column direction respectively, and the second direction is approximately symmetrically set with the first direction in respect to the row direction.

In some embodiments, in the array substrate provided by embodiments of the present disclosure, the array substrate further includes: an alignment layer disposed on a side of the layer where the common electrode is located facing away from the base substrate, where an orientation direction of the alignment layer is from the second via hole to the first via hole.

In some embodiments, in the array substrate provided by embodiments of the present disclosure, the array substrate further includes: a plurality of first alignment marks disposed in the same layer as the plurality of gate lines, where the plurality of first alignment marks are disposed at row gaps between the green sub-pixel areas and adjacent to the first electrode of each of the transistors.

In some embodiments, in the array substrate provided by embodiments of the present disclosure, the array substrate further includes: a plurality of second alignment marks disposed in the same layer with the plurality of data lines; where the plurality of second alignment marks are disposed in one-to-one correspondence with some of the first alignment marks; an orthographic projection of the second alignment mark on the base substrate is located in an orthographic projection of a first alignment mark corresponding to the second alignment mark on the base substrate; and a center of the orthographic projection of the second alignment mark on the base substrate substantially coincides with a center of the orthographic projection of the first alignment mark corresponding to the second alignment mark on the base substrate.

In some embodiments, in the array substrate provided by embodiments of the present disclosure, the array substrate further includes: a plurality of third alignment marks disposed in the same layer as an active layer of the transistors; where the plurality of third alignment marks are disposed in one-to-one correspondence with some of the first alignment marks; the third alignment marks and the second alignment marks correspond to different first alignment marks, respectively; an orthographic projection of the third alignment mark on the base substrate is located in an orthographic projection of a first alignment mark corresponding to the third alignment mark on the base substrate; and a center of the orthographic projection of the third alignment mark on the base substrate substantially coincides with a center of the orthographic projection of the first alignment mark corresponding to the third alignment mark on the base substrate.

In some embodiments, in the array substrate provided by embodiments of the present disclosure, a line width of the data line in an area where the first avoidance portion is located is less than a line width of the data line in an area where the second avoidance portion is located.

On the other hand, embodiments of the present disclosure provide a display apparatus including an array substrate and an opposing substrate opposite with each other, and a liquid crystal layer disposed between the array substrate and the opposing substrate, where the array substrate is the array substrate provided by embodiments of the present disclosure.

In some embodiments, in the above display apparatus provided by embodiments of the present disclosure, the opposing substrate includes a main photo spacer; an orthographic projection of an end of the main photo spacer close to the array substrate on the base substrate is located in an orthographic projection of the widened portion on the base substrate; a distance between an edge of the orthographic projection of the widened portion on the base substrate and an edge of the orthographic projection of the end of the photo spacer close to the array substrate on the base substrate is greater than or equal to 5 µm and less than or equal to 10 µm.

In some embodiments, in the above display apparatus provided by embodiments of the present disclosure, a distance between an orthographic projection of the avoidance portion on the base substrate and the orthographic projection of the end of the main photo spacer close to the array substrate on the base substrate is greater than or equal to 15 µm and less than or equal to 20 µm.

In some embodiments, in the above display apparatus provided by embodiments of the present disclosure, the opposing substrate includes a photo spacer; the data line includes an wire portion whose orthographic projection overlaps with the common electrode line; the wire portion extends at an incline in a predetermined direction with respect to a column direction; and a center of an orthographic projection of an end of the photo spacer close to the array substrate on the base substrate is offset along the predetermined direction relative to a symmetry axis of the wire portion in an extension direction.

In some embodiments, in the above display apparatus provided by embodiments of the present disclosure, the opposing substrate further includes a plurality of color resistors, each of the plurality of color resistors is disposed in correspondence with the sub-pixel areas in each column; and the plurality of color resistors extend in a zigzag direction in the column direction.

In some embodiments, in the above display apparatus provided by embodiments of the present disclosure, each of the plurality of color resistors includes a plurality of convex portions, and the plurality of convex portions correspond to articulating portions at edges of the sub-pixel areas.

In some embodiments, in the above display apparatus provided by embodiments of the present disclosure, each of the plurality of color resistors further includes a plurality of bend portions, and the plurality of bend portions are disposed between opening areas of adjacent sub-pixel areas in the same column.

On the other hand, embodiments of the present disclosure provide a method for manufacturing the above-described array substrate, including:
providing a base substrate, where the base substrate includes a plurality of sub-pixel areas arranged in an array;
forming a plurality of data lines at column gaps of the plurality of sub-pixel areas, and forming a plurality of gate lines and a plurality of common electrode lines at row gaps of the plurality of sub-pixel areas; where at least part of the plurality of data lines include a widened portion for supporting a photo spacer; and at least one of at least part of the plurality of gate lines and at least part of the plurality of common electrode lines includes an avoidance portion wrapped around the widened portion.

### Brief Description of Figures

FIG. 1 shows a schematic structural diagram of a display substrate provided by embodiments of the present disclosure.
FIG. 2 shows another schematic structural diagram of a display substrate provided by embodiments of the present disclosure.
FIG. 3 shows a cross-sectional view along the line I-I' in FIG. 2.
FIG. 4 shows a cross-sectional view along the line II-II' in FIG. 2.
FIG. 5 shows a cross-sectional view along the line III-III' in FIG. 2.
FIG. 6 shows a schematic structural diagram of a layer where gate lines are located in FIG. 2.
FIG. 7 shows a schematic structural diagram of an active layer in FIG. 2.
FIG. 8 shows a schematic structural diagram of a layer where data lines are located in FIG. 2.
FIG. 9 shows a schematic structural diagram of a planarization layer in FIG. 2.
FIG. 10 shows a schematic structural diagram of a layer where a pixel electrode is located in FIG. 2.
FIG. 11 shows a schematic structural diagram of a passivation layer in FIG. 2.
FIG. 12 shows a schematic structural diagram of a layer where a common electrode is located in FIG. 2.
FIG. 13 is another schematic structural diagram of a display substrate provided by embodiments of the present disclosure.
FIG. 14 shows a schematic structural diagram of a layer where gate lines are located in FIG. 13.
FIG. 15 shows a schematic structural diagram of an active layer in FIG. 13.
FIG. 16 shows a schematic structural diagram of a layer where data lines are located in FIG. 13.
FIG. 17 shows a schematic structural diagram of a planarization layer in FIG. 13.
FIG. 18 shows a schematic structural diagram of a layer where a pixel electrode is located in FIG. 13.
FIG. 19 shows a schematic structural diagram of a passivation layer in FIG. 13.
FIG. 20 shows a schematic structural diagram of a layer where the common electrode is located in FIG. 13.
FIG. 21 shows another schematic structural diagram of a display substrate provided by embodiments of the present disclosure.
FIG. 22 shows another schematic structural diagram of a display substrate provided by embodiments of the present disclosure.
FIG. 23 shows a schematic structural diagram of a transistor provided by embodiments of the present disclosure.
FIG. 24 shows another schematic structural diagram of a transistor provided by embodiments of the present disclosure.
FIG. 25 shows another schematic structural diagram of a transistor provided by embodiments of the present disclosure.
FIG. 26 shows another schematic structural diagram of a display substrate provided by embodiments of the present disclosure.
FIG. 27 shows a schematic diagram of an alignment provided by embodiments of the present disclosure.
FIG. 28 shows a schematic structural diagram of alignment marks provided by embodiments of the present disclosure.
FIG. 29 shows a schematic diagram of the alignment of partial alignment marks in FIG. 28.
FIG. 30 shows a schematic structural diagram of alignment marks provided by embodiments of the present disclosure.
FIG. 31 shows a schematic diagram of the alignment of partial alignment marks in FIG. 30.
FIG. 32 shows another schematic diagram of the alignment of partial alignment marks in FIG. 30.
FIG. 33 shows a schematic structural diagram of a display apparatus provided by embodiments of the present disclosure.
FIG. 34 shows a cross-sectional view along a line IV-IV' in FIG. 33.
FIG. 35 shows a cross-sectional view along a line V-V' in FIG. 33.
FIG. 36 is a cross-sectional view along a line VI-VI' in FIG. 33.
FIG. 37 shows a schematic diagram of a position of a main photo spacer provided by embodiments of the present disclosure.
FIG. 38 shows a schematic diagram of a position of a secondary photo spacer provided by embodiments of the present disclosure.
FIG. 39 shows a schematic structural diagram of color resistors provided by embodiments of the present disclosure.

### Detailed Description

In order to make the purpose, technical solutions and advantages of embodiments of the present disclosure more clear, the technical solutions of embodiments of the present disclosure will be clearly and completely described below in conjunction with the drawings of embodiments of the present disclosure. It should be noted that, in order to make the purpose, technical solutions and advantages of embodiments of the present disclosure more clear, the technical solutions of embodiments of the present disclosure will be clearly and completely described below in conjunction with the drawings of embodiments of the present disclosure. It should be noted that in the accompanying drawings, the thickness of a layer, a film, a panel, an area, etc., is enlarged for clarity. In the disclosure, an exemplary embodiment is described by referring to a cross-sectional diagram as a schematic diagram of an idealized embodiment. In this way, deviations from the shape of the drawing as a result of, for example, manufacturing techniques and/or tolerances are expected. Thus, embodiments described in the present disclosure should not be construed as being limited to the specific shape of an area as shown in the present disclosure, but rather include deviations in shape caused by, for example, manufacturing. For example, areas illustrated or described as flat may typically have rough and/or non-linear features; sharp corners illustrated may be rounded, etc. Thus, the areas shown in the drawings are schematic in nature, and their dimensions and shapes do not purport to be the exact shape of the areas shown, do not reflect true proportions, and are intended to be illustrative of the present disclosure only. And the same or similar labels throughout represent the same or similar components or components with the same or similar functions. In order to keep the following description of embodiments of the present disclosure clear and concise, the present disclosure omits detailed descriptions of known functions and known components.

Unless otherwise defined, technical or scientific terms used herein shall have their ordinary meaning understood by a person of ordinary skill in the art to which the disclosure belongs. "First", "second" and similar words used in the description and the claims of the disclosure do not indicate any order, quantity or importance, but are only used to distinguish different components. Words such as "include" or "comprise" mean that the elements or objects appearing before the word include the elements or objects listed after the word and their equivalents, without excluding other elements or objects. The words "connection", "connecting", etc. are not limited to physical or mechanical connection, but can include electrical connection whether direct or indirect. Words such as "inside", "outside", "up", "down" are only used to express relative positional relationships. When the absolute position of the described object is changed, the relative positional relationship may also be changed accordingly.

In the following description, when an element or a layer is described as being "on another element or layer" or "connected with another element or layer", the element or layer may be directly on another element or layer or directly connected with another element or layer, or there may be an intermediate element or an intermediate layer. When an element or a layer is described as being "arranged on another element or layer", the element or layer may be directly on another element or layer or directly connected with another element or layer, or there may be an intermediate element or an intermediate layer. However, when an element or a layer is described as being "directly on another element or layer" or "directly connected with another element or layer", there is no intermediate element or intermediate layer. Word "and/or" indicates any and all combinations of one or more associated listed items.

With the progress of science and technology and the continuous improvement of human living standards, the performance requirements of the market for display screens are increasing, especially for high-performance products such as high resolution, high refresh rate, and high contrast, such as large-size or oversize 8K and 16K products, for example, 75", 85", 98", 110". Resolution is the precision of screen image, which refers to the number of pixels that can be displayed on the display screen. The higher the resolution, the more delicate the display screen will be. The number of pixels on the display screen with resolutions of 4K, 8K and 16K is 3840 * 2160, 7680 * 4320 and 15360 * 8640 respectively. The size of the display area of the display screen with the same size basically changes little. Therefore, if the resolution of the display screen with the same size is increased (that is, the number of horizontal and vertical pixels is increased), the size of the sub-pixel will inevitably decrease, and the metal wiring space of the array substrate will be greatly reduced. In the relevant technology, the margin for placing the photo spacer (PS) at the gate line is relatively small; the risk of poor display caused by photo spacer is increased. Especially for the super large size display screen, it is necessary to consider that the gravity of the display screen causes serious dislocation between the array substrate and the opposing substrate (CF). In the design of the photo spacer (PS), it is necessary to take into account the optimization of defects such as dark DNU/snowflake Mura.

Among them, the dark state DNU actually shows that the dark state of 0 gray scale (L0) is partially bright, and the overall display brightness is uneven, which may be caused by the serious dislocation of the array substrate and the opposing substrate of the super large display screen. Under the stress state, the small deformation between the array substrate and the opposing substrate causes the trend of relative movement of the photo spacer, and the local stress is generated. Under stress, the birefringence phenomenon that occurs locally on the display screen causes a change in the delay of light passing through the liquid crystal, thereby affecting the brightness change in the dark state. The inventor found that enlarging the platform used to support the photo spacer in the array substrate, ensuring a certain distance from the edge of the photo spacer to the edge of the platform, can effectively ensure that the final position of the photo spacer has no significant fluctuations, and the box thickness is uniform, effectively improving the dark state DNU defect.

The poor performance of snowflake Mura is that the display screen is heavily slapped, and snowflake Mura occurs near the slapping position. The greater the slapping force, the more difficult it is to recover. It may be that the strong slapping of the display screen causes some photo spacers to slide onto the double-layer metal line. At this time, the compression ratio of the photo spacers on the double-layer metal line is greater than the compression ratio of the photo spacers on the single-layer metal line, causing an increase in the distance (gap) between the array substrate and the opposing substrate, forming a vacuum space (Bubble). After the external pressure is removed, the increase in compression rate leads to an increase in friction force, and the photo spacer/liquid crystal cannot recover, resulting in light leakage. The actual phenomenon is manifested as a snowflake Mura. The inventor found that in order to reduce the risk of snowflake Mura, especially for oversized products, a certain distance should be reserved between the photo spacer and the double-layer metal line.

Based on this, the present disclosure provides a solution suitable for high resolution or ultra-high resolution (such as 4K, 8K, 16K, etc.) oversized products, which can be used to improve the dark state DNU/snowflake Mura and other defects caused by the photo spacer.

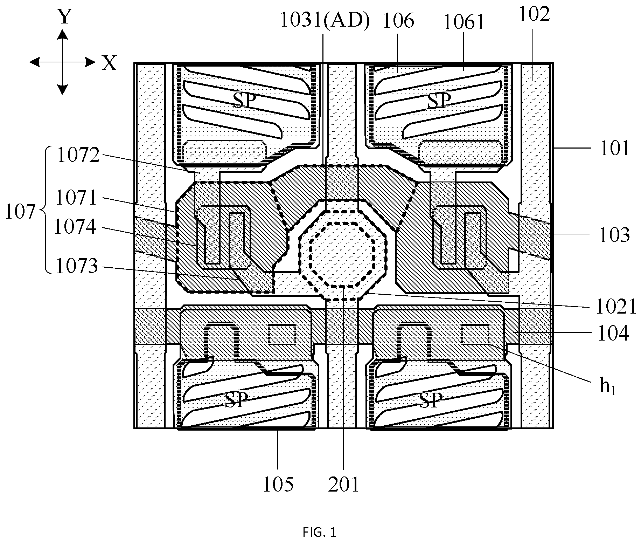

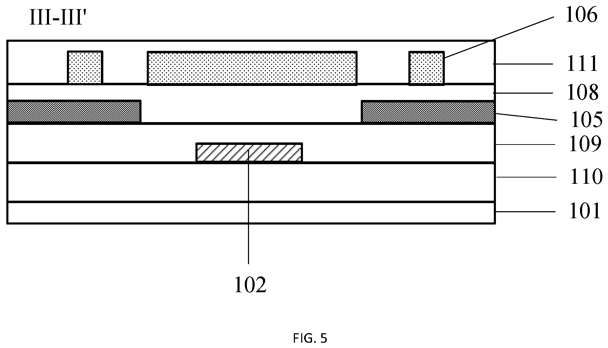

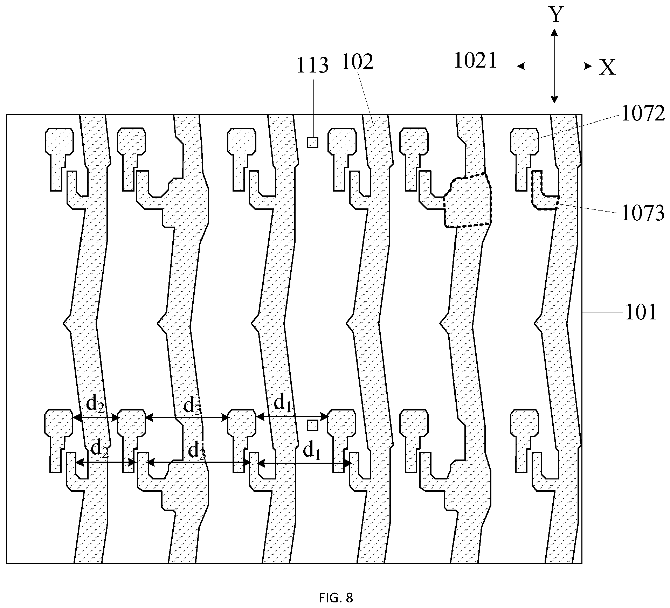

In some embodiments, embodiments of the present disclosure provide an array substrate, as shown in FIGS. 1 to 8, including:
a base substrate 101, including a plurality of sub-pixel areas SP arranged in an array; optionally, the base substrate 101 is a rigid substrate made of glass or the like, or a flexible substrate made of polyimide or the like;
a plurality of data lines 102, disposed at column gaps of the sub-pixel areas SP, where at least part of the data lines 102 includes a widened portion 1021 for supporting a photo spacer (PS); optionally, a material of the data line 102 includes a metal material, which has a single-layer or multi-layer structure formed by molybdenum, aluminum, titanium, copper, alloy, and the like; for example, the data line 102 is a laminated structure formed by titanium metal layer/aluminum metal layer/titanium metal layer; and
a plurality of gate lines 103 and a plurality of common electrode lines 104, disposed at row gaps of the sub-pixel areas SP; where the plurality of gate lines 103 and the plurality of common electrode lines 104 are arranged in a different layer from the plurality of data lines 102; and at least one of at least part of the gate lines 103 and at least part of the common electrode lines 104 includes an avoidance portion AD wrapped around the widened portion 1021. Optionally, the gate line 103 and the common electrode line 104 are arranged in the same layer. In the present disclosure, "the same layer" refers to a layer structure formed by using the same film forming process to form a film layer for making specific patterns, and then formed through a single mask patterning process using the same mask template; among them, the single mask patterning process corresponds to one mask template (also known as a mask). According to different specific patterns, the single mask patterning process may include multiple exposure, development or etching processes; and specific patterns in the formed layer structure may be continuous or discontinuous. These specific patterns may be at the same height or have the same thickness, or may be at different heights or have different thicknesses. In this way, the plurality of gate lines 103 and the plurality of common electrode lines 104 can be formed simultaneously by using the same conductive layer, which is conducive to reducing the mask process and the number of film layers. Optionally, the materials of the gate line 103 and the common electrode line 104 include metal materials, which can be a single-layer or multi-layer structure formed by molybdenum, aluminum, titanium, copper, alloy, etc., and, for example, the gate line 103 and the common electrode line 104 are single-layer structures formed by molybdenum metal layers.

In the above array substrate provided by embodiments of the present disclosure, since the gate lines 103 and the common electrode lines 104 are simultaneously arranged at the row gaps of the sub-pixel areas SP, a wiring space of the gate lines 103 is limited, the line width is narrow, and the photo spacer (PS) cannot be effectively supported. Therefore, the present disclosure uses the data lines 102 at the column gaps of the sub-pixel areas SP to support the photo spacer (PS). Specifically, the data line 102 is partially widened and set to the widened portion 1021 to stabilize the support of the photo spacer (PS), so as to improve the poor dark state DNU caused by the photo spacer (PS). In addition, at least one of the gate line 103 and the common electrode line 104 is provided with an avoidance portion AD wrapped around the widened portion 1021, which reduces the risk of the photo spacer (PS) sliding onto a double-layer metal line (including the data line 102 and the gate line 103; or including the data line 102 and the common electrode line 104), and improves the snowflake Mura caused by the photo spacer (PS).

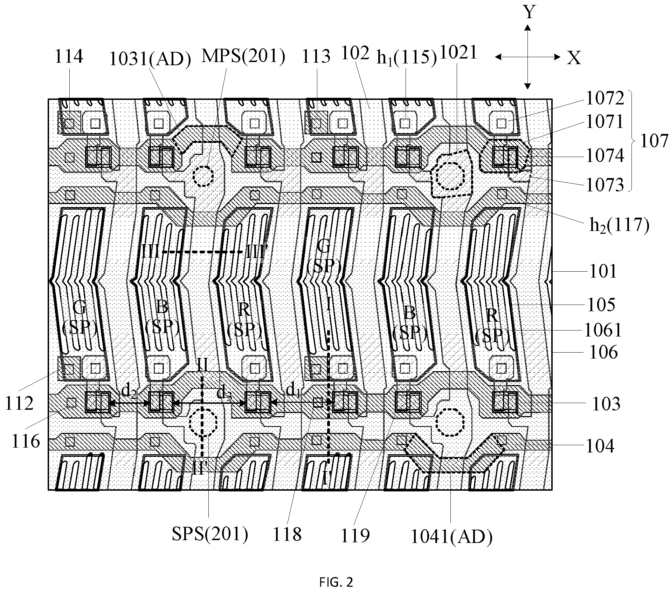

In some embodiments and according to the claimed invention, in the above array substrate provided by embodiments of the present disclosure, as shown in FIG. 2, FIG. 6, FIG. 13 and FIG. 14, at least part of the gate lines 103 include a first avoidance portion 1031 wrapped around the widened portion 1021, and at least part of the common electrode lines 104 include a second avoidance portion 1041 wrapped around the widened portion 1021. Optionally, each gate line 103 includes the first avoidance portion 1031, and each common electrode line 104 includes the second avoidance portion 1041, so as to minimize the risk of the photo spacer (PS) sliding onto the double-layer metal lines (including the data line 102 and gate line 103, or the data line 102 and the common electrode line 104), and significantly improve the snowflake Mura caused by the photo spacer (PS). In addition, considering that charging ratio is an important indicator of LCD panel (including an array substrate), its value directly affects the display performance of LCD panel, such as brightness, transmittance, image quality, etc. The calculation formula of charging ratio C_{Ratio} is *C_{Ratio}* = (*Vₚᵢₓₑₗ*/*V_{data}*) * 100%, where V_{data} represents a voltage of a data signal provided by the data line 102 during an action time of the gate line 103, and Vₚᵢₓₑₗ represents a peak value of a pixel voltage after a sub-pixel is charged. If the gate line 103 is wrapped separately, a resistance of the gate line 103 will be greatly increased, which will affect the charging rate. If the common electrode line 104 is wrapped separately, a pressure difference between the gate line 103 and the common electrode line 104 will cause a leakage edge to follow a side of the common electrode line 104 near the sub-pixel area SP. Therefore, if the common electrode line 104 is wrapped with a longer line, a black matrix (BM) needs to be synchronously widened to solve the leakage problem. However, the widened black matrix will greatly affect the opening rate and transmittance. Therefore, the present disclosure sets up synchronous winding of the gate line 103 and the common electrode line 104 (manifested as the gate line 103 having a first avoidance portion 1031, and the common electrode line 104 having a second avoidance portion 1041) to balance electrical performance (charging rate) and optical performance (transmittance). Optionally, a distance between the first avoidance portion 1031 and the photo spacer (PS) is equivalent to a distance between the second avoidance portion 1041 and the photo spacer (PS) (for example, within an error range of ± 5%), and the first avoidance portion 1031 and the second avoidance portion 1041 are both provided with a folded line structure, and both of them present a diamond like pattern as a whole.

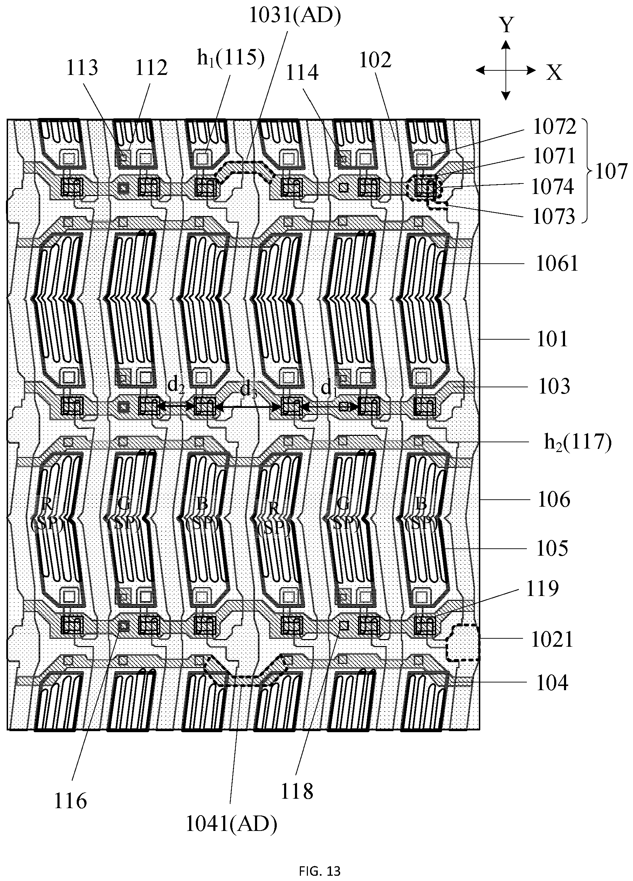

In some embodiments, in the above array substrate provided by embodiments of the present disclosure, as shown in FIGS. 2 and 13, a line width of the data line 102 in an area where the first avoidance portion 1031 is located is smaller than a line width of the data line 102 in an area where the second avoidance portion 1041 is located. As signals on the data line 102 and the gate line 103 are pulse signals, an overlapping capacitance between the two is too large to cause mutual interference. Therefore, the present disclosure sets the line width of the data line 102 in the area where the first avoidance portion 1031 is located to be smaller, in order to reduce the overlapping capacitance between the data line 102 and the gate line 103, and to reduce the mutual interference. The signal on the common electrode line 104 is a fixed potential signal, so there is almost no interference between the common electrode line 104 and the data line 102, so the data line 102 can be set to have a larger line width in the area where the first avoidance portion 1031 is located.

In some embodiments, in the above array substrate provided by embodiments of the present disclosure, as shown in FIGS. 2 and 13, the plurality of sub-pixel areas SP include a plurality of red sub-pixel areas R, a plurality of green sub-pixel areas G, and a plurality of blue sub-pixel areas B. The columns where the red sub-pixel areas R are located, the columns where the green sub-pixel areas G are located, and the columns where the blue sub-pixel areas B are located are provided in alternating cycles in a row direction, and the data line(s) 102 located at the column gap(s) between the column(s) where the red sub-pixel area(s) R is/are located and the column(s) where the blue sub-pixel area(s) B is/are located include(s) the widened portion(s) 1021. Due to the sensitivity of the human eye to green, the panel transmittance is strongly correlated with the opening rate of the green sub-pixel area G. Therefore, in the disclosure, the photo spacer (PS) is placed on the data line 102 at the column gap between the column where the red sub-pixel area R is located and the column where the blue sub-pixel area B is located, in order to minimize the impact on the opening rate of the green sub-pixel area G. This also leads to the fact that the design structure of the diamond pattern mentioned above is not present in all sub-pixel areas, but rather follows a regular periodic distribution with two sub-pixel areas spaced apart. Of course, in some embodiments, the cycle value can also be designed based on factors such as the photo spacer size (PS CD) and contact density. In addition, the plurality of sub-pixel areas SP can also include white sub-pixel areas, yellow sub-pixel areas, etc., which is not limited here.

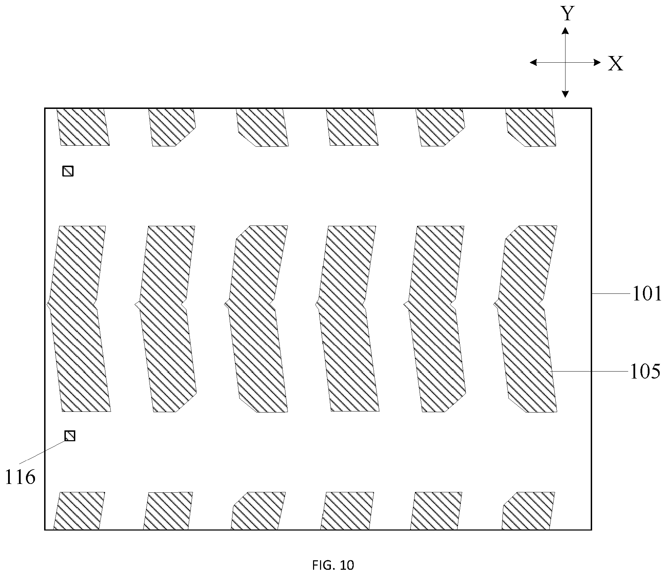

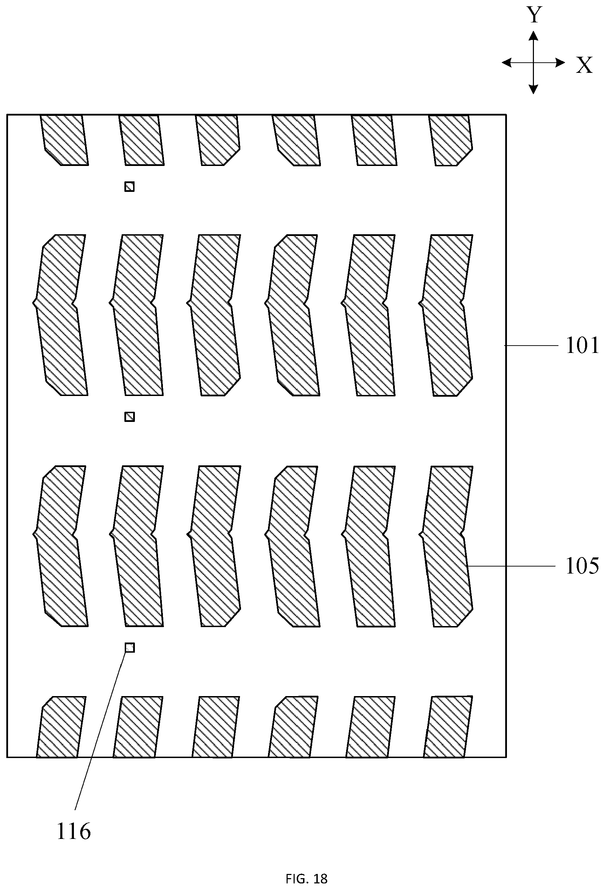

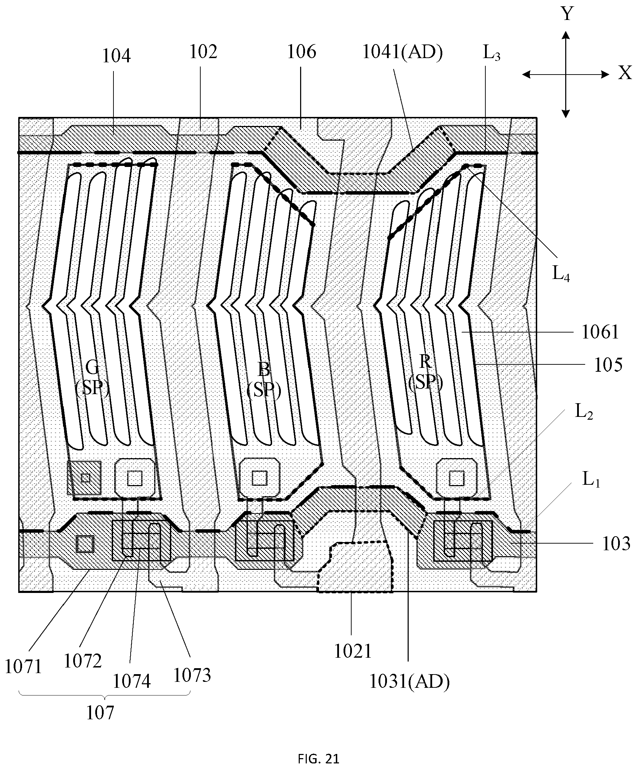

In some embodiments, in the above array substrate provided by embodiments of the present disclosure, as shown in FIG. 10, FIG. 18, FIG. 21 and FIG. 22, an orthographic projection of the gate line 103 on the base substrate 101 includes a first boundary L₁ far away from an orthographic projection of the widened portion 1021 on the base substrate 101. The array substrate further includes a plurality of pixel electrodes 105 at least located in a plurality of sub-pixel areas SP, and an orthographic projection of each pixel electrode 105 on the base substrate 101 includes a second boundary L₂ disposed close to the first boundary L₁. Considering the design requirement of minimizing a side capacitance Cpg between the pixel electrode 105 and the gate line 103, in the present disclosure, at least part of the second boundaries L₂ are approximately parallel to an adjacent first boundary L₁, respectively. It should be noted that in embodiments provided by the disclosure, due to the limitations of process conditions or the influence of other factors such as measurement, the above "approximately parallel" may be exactly parallel, and there may also be some deviations (for example, an included angle is within the range of 0°^{~}5°). Therefore, the "approximately parallel" relationship between the above features, as long as it meets the allowable error, belongs to the protection scope of the disclosure. Continue to refer to FIG. 21, optionally, at least part of the shape of the pixel electrode near the gate line 103 is set to match the first boundary L₁.

In some embodiments, in the above array substrate provided by embodiments of the present disclosure, as shown in FIG. 21, an orthographic projection of the common electrode line 104 on the base substrate 101 includes a third boundary L₃ far away from the orthographic projection of the widened portion 1021 on the base substrate 101; the orthographic projection of each pixel electrode 105 on the base substrate 101 includes a fourth boundary L₄ disposed close to the third boundary L₃. Considering the design requirement of minimizing a side capacitance Cpc between the pixel electrode 105 and the common electrode line 104, in the present disclosure, at least part of the fourth boundaries L₄ are approximately parallel to an adjacent third boundary L₃, respectively. The above "approximately parallel" may be exactly parallel, or within an error range (such as 0°^{~}5°) caused by factors such as process and measurement.

Further referring to FIG. 21, the pixel electrode 105 of the red sub-pixel area R and the pixel electrode 105 of the blue sub-pixel area B have made corresponding "winding" settings at the position near the first avoidance portion 1031 contained in the gate line 103 and the second avoidance portion 1041 contained in the common electrode line 104, while the pixel electrode 105 of the green sub-pixel area G has not "winding", which will result the area of the corresponding pixel electrode 105 in the red sub-pixel area R, the area of the corresponding pixel electrode 105 in the blue sub-pixel area B, and the area of the corresponding pixel electrode 105 in the green sub-pixel area G are different. In the present disclosure, the area of an orthographic projection of the pixel electrode 105 in the red sub-pixel area R on the base substrate 101 is Sr, the area of an orthographic projection of the pixel electrode 105 in the green sub-pixel area G on the base substrate 101 is Sg, the area of an orthographic projection of the pixel electrode 105 in the blue sub-pixel area B on the base substrate 101 is Sb, and a ratio of Sg:Sb:Sr is (881^{~}1635):(847^{~}1573):(843^{~}1565). Where, Sg>Sb, Sg>Sr, Sb≈Sr, for example, the ratio of Sg: Sb: Sr is 1258: 1210: 1204. The overlapping areas between the pixel electrodes 105 with different areas and the common electrodes 106 are different, resulting in non-uniformity of a storage capacitance (Cst) in each sub-pixel area SP, which in turn leads to differences of charging rates in each sub-pixel area SP. Specifically, data before compensation in Table 1 represents the storage capacitances (Cst) and charging rates of red sub-pixel area R, green sub-pixel area G, and blue sub-pixel area B shown in FIG. 21. It can be seen from Table 1 that the difference between the storage capacitance (Cst) of red sub-pixel area R, the storage capacitance (Cst) of green sub-pixel area G, and the storage capacitance (Cst) of blue sub-pixel area B can reach 0.026pf, and the difference between the charging rate of red sub-pixel area R, the charging rate of green sub-pixel area G, and the charging rate of in the blue sub-pixel area B can reach 0.3%.

**Table 1**

| | Before compensation | | | After compensation | | |
|---|---|---|---|---|---|---|
| sub-pixel areas | R | G | B | R | G | B |
| Cst (pf) | 0.296 | 0.322 | 0.298 | 0.322 | 0.322 | 0.322 |
| Charging rate (%) | 83.4 | 83.1 | 83.4 | 83.1 | 83.1 | 83.1 |

Since the smaller the charging rate of the sub-pixel area SP, the smaller the brightness. The charging rate of the red sub-pixel area R and the charging rate of the blue sub-pixel area B are equal and larger than the charging rate of the green sub-pixel area G. Therefore, the brightness of the red sub-pixel area R and the brightness of the blue sub-pixel area B are similar, while the brightness of the green sub-pixel area G is smaller, which is reflected in the poor vertical dark line (V-Block) appearing in the columns where the green sub-pixel areas G are located.

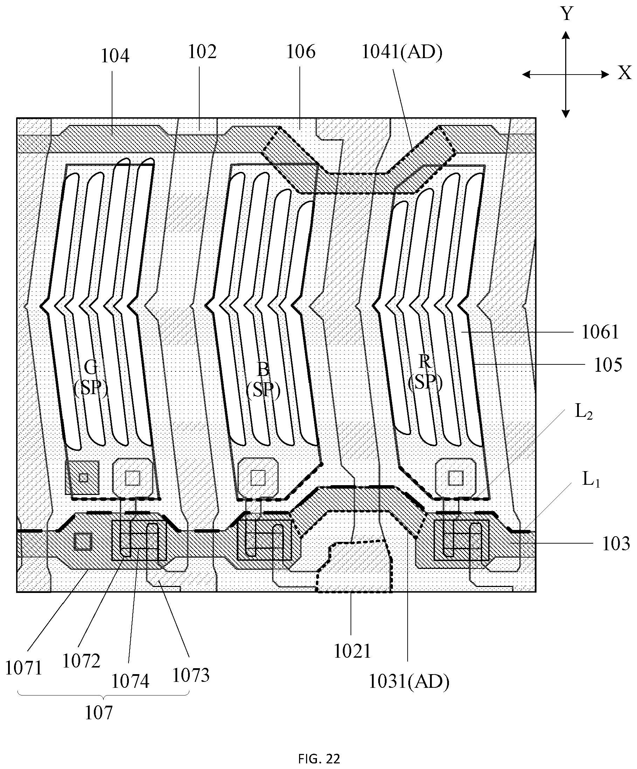

Based on this, in the above array substrate provided by embodiments of the present disclosure, in order to reduce the risk of vertical dark lines, an overlapping area of the pixel electrode 105 and the common electrode 106 is compensated. As shown in FIG. 22, it is possible to set that the orthographic projection of the pixel electrode 105 in the green sub-pixel area G on the base substrate 101 and the orthographic projection of the common electrode line 104 on the base substrate 101 do not overlap with each other; the orthographic projection of the pixel electrode 105 in the red sub-pixel area R and the orthographic projection of the pixel electrode 105 in the blue sub-pixel area B on the base substrate 101 partially overlap with the orthographic projection of the common electrode line 104 on the base substrate 101, respectively. It should be noted that in principle, the storage capacitance (Cst) in the red sub-pixel area R, the storage capacitance (Cst) in the green sub-pixel area G, and the storage capacitance (Cst) in the blue sub-pixel area B should be basically the same, so as to minimize the difference in charging rates of different sub-pixel areas SP. Therefore, the orthographic projection of the pixel electrode 105 in the red sub-pixel area R on the base substrate 101 and the orthographic projection of the pixel electrode 105 in the blue sub-pixel area B on the base substrate 101 and the orthographic projection of the common electrode line 104 on the base substrate 101 may or may not overlap.

As can be seen from FIG. 22, after compensation, an area of an orthographic projection of the pixel electrode 105 in the red sub-pixel area R on the base substrate 101 is Sr, an area of an orthographic projection of the pixel electrode 105 in the green sub-pixel area G on the base substrate 101 is Sg, an area of an orthographic projection of the pixel electrode 105 in the blue sub-pixel area B on the base substrate 101 is Sb, and a ratio of Sg:Sb:Sr is (909^{~}1687):(930^{~}1727):(946^{~}1758). For example, Sg: Sb: Sr is 1298:1329: 1352, so that the storage capacitance (Cst) in the red sub-pixel area R, the storage capacitance (Cst) in the green sub-pixel area G, and the storage capacitance (Cst) in the blue sub-pixel area B are basically the same (that is, the same or within the error range caused by factors such as process and measurement). The difference between the charging rate of the red sub-pixel area R and the charging rate of the green sub-pixel area G is greater than or equal to 0 and less than 0.003, and the charging rate of the blue sub-pixel area B is approximately the same as the charging rate of the red sub-pixel area R (that is, the same or within the error range caused by factors such as process and measurement). According to the compensated data in Table 1, the storage capacitances (Cst) of the red sub-pixel area R, the green sub-pixel area G, and the blue sub-pixel area B are the same, and the charging rates of the red sub-pixel area R, the green sub-pixel area G, and the blue sub-pixel area B are the same.

In some embodiments, in the array substrate provided by embodiments of the present disclosure, as shown in FIGS. 2 and 13, the array substrate further includes a plurality of transistors 107 located at the row gaps of the sub-pixel areas SP. A distance between a transistor 107 located between adjacent two red sub-pixel areas R and a transistor 107 located between adjacent two green sub-pixel areas G is d₁; a distance between a transistor 107 located between adjacent two green sub-pixel areas G and a transistor 107 located between adjacent two blue sub-pixel areas B is d₂; a distance between a transistor 107 located between adjacent two blue sub-pixel areas B and a transistor 107 located between adjacent two red sub-pixel areas R is d₃; and d₂ <d₁ <d₃. In this way, the transistor 107 and the first avoidance portion 1031 can be staggered in the row direction X, so as to prevent the transistor 107 and the first avoidance portion 1031 from occupying too much space in the column direction Y and affecting the opening rate.

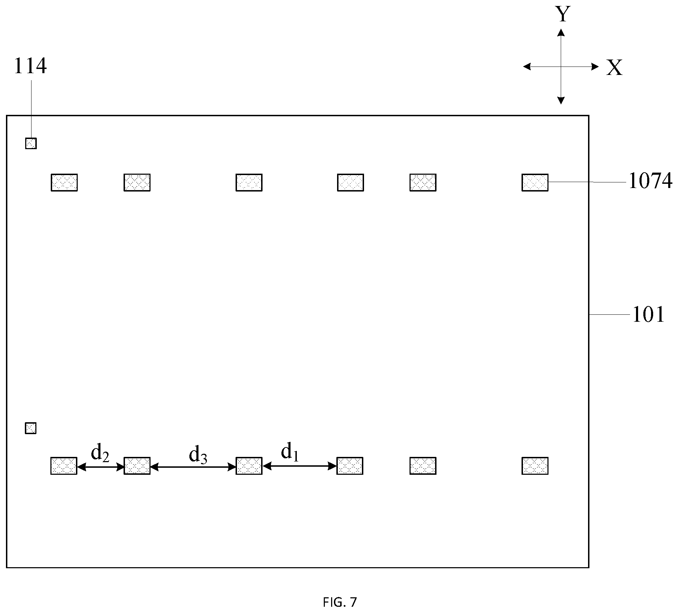

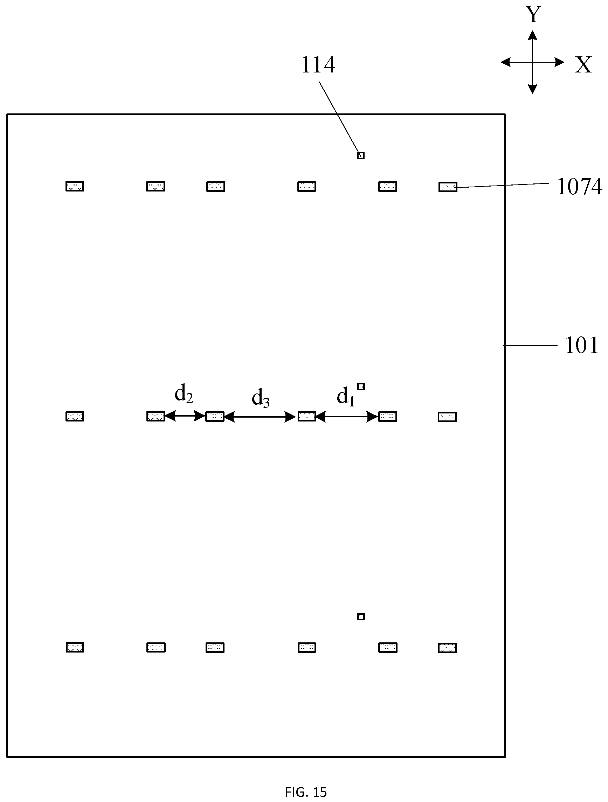

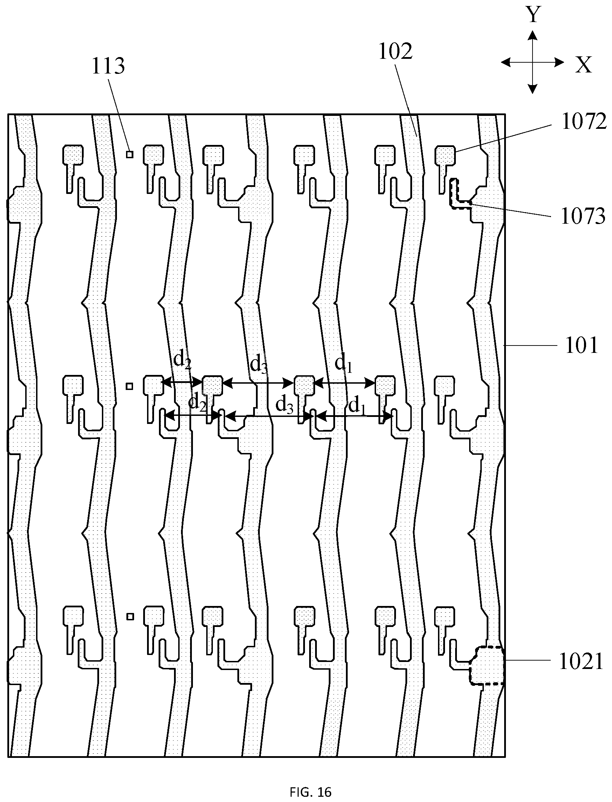

It is worth noting that when a plurality of transistors 107 at the row gaps between sub-pixel areas SP meet the above relationship d₂ <d₁ <d₃, the first electrode 1072, the second electrode 1073, and the active layer 1074 of the corresponding transistor 107 also basically meet the above relationship d₂ <d₁ <d₃, as shown in FIGS. 7, 8, 15, and 16.

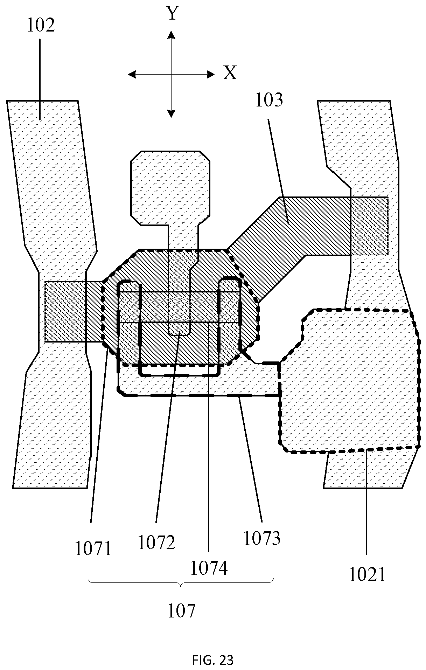

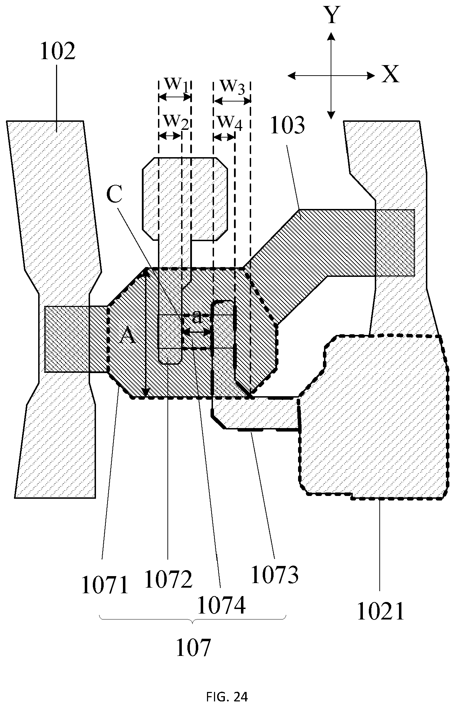

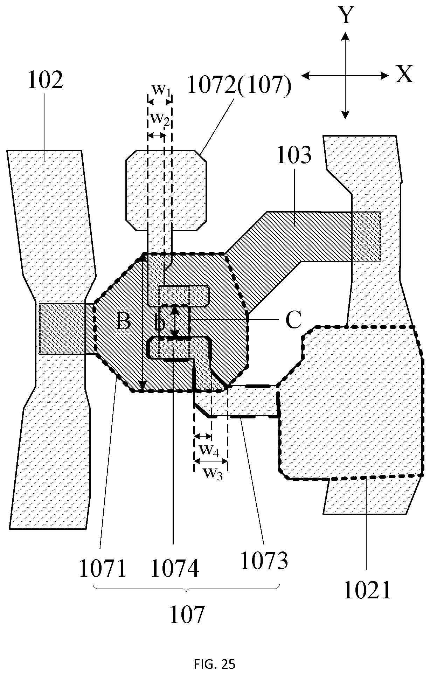

FIG. 23 shows a schematic structural diagram of a transistor 107. It can be seen from FIG. 23 that a double channel design is formed between the first electrode 1072 of the transistor 107 and the "U-shaped" second electrode 1073. This design results in a large overlapping capacitance between the second electrode 1073 of the transistor 107 and the gate electrode 1071 of the transistor 107, increasing the load on the gate line 103 multiplexed as the gate electrode 1071, and affecting the charging rate. Therefore, in order to reduce the load on the gate line 103, as shown in FIG. 24 and FIG. 25, in the above array substrate provided by embodiments of the present disclosure, the channel area C between the first electrode 1072 and the second electrode 1073 adopts a single channel "straight line" shape design, which can reduce the load by about 20% and increase the charging rate by 4%.

In some embodiments, as shown in FIG. 24, carriers in the channel area C of the transistor 107 can migrate along the row direction X (that is, the channel area C is designed perpendicular to the row direction X), a length of the channel area C of the transistor 107 in the row direction X is a, and a line width of the gate electrode 1071 of the transistor 107 in the column direction Y is A. In order to improve the opening ratio while ensuring the mobility, a/A can be set to be greater than or equal to 1/5 and less than or equal to 2/3, For example, a/A is 1/5, 2/9, 1/4, 5/18, 1/2, 11/36, 1/3, 2/5, 3/5, 2/3, etc. Optionally, the length a of the channel area C of the transistor 107 in the row direction X is greater than or equal to 5 µm and less than or equal to 12 µm. After considering the alignment offset and process fluctuation between the layer where the gate line 103 is located and the active layer 1074 of the transistor 107, the active layer 1074 can still be guaranteed to be on the gate electrode 1071 to avoid the influence of light on the characteristics of the transistor 107. The line width A of the gate electrode 1071 of the transistor 107 in the column direction Y can be set to be greater than or equal to 18 µm and less than or equal to 25 µm.

In some embodiments, as shown in FIG. 25, carriers in the channel area C of the transistor 107 can also migrate along the column direction Y (that is, the channel area C is designed parallel to the row direction X), a width of the channel area C of the transistor 107 in the column direction Y is b, and a line width of the gate electrode 1071 of the transistor 107 in the column direction Y is B. In order to improve the opening ratio while ensuring the mobility, b/B can be greater than or equal to 1/6 and less than or equal to 3/5. For example, b/B can be 1/6, 1/5, 9/40, 1/4, 11/40, 3/10, 1/3, 1/2, 3/5, etc. Optionally, the length b of the channel area C of the transistor 107 in the column direction X is greater than or equal to 5 µm and less than or equal to 12 µm. After considering the alignment offset and process fluctuation between the layer where the data line 102 is located and the active layer 1074 of the transistor 107, and between the layer where the gate line 103 is located and the active layer 1074 of the transistor 107, the line width B of the gate electrode 1071 of the transistor 107 in the column direction Y can be set to be greater than or equal to 20 µm and less than or equal to 30 µm. By comparing FIG. 24 and FIG. 25, it can be seen that compared with the design of the channel area C parallel to the row direction X shown in FIG. 25, the design scheme of the channel area C perpendicular to the row direction X shown in FIG. 24 can reduce the line width of the gate electrode 1071 by 2µm^{~}5 µm, while meeting the distance requirements from the active layer 1074 to the layer where the gate line 103 is located; under the same condition of light leakage margin, the opening ratio of the sub-pixel area SP can be increased by more than 0.5%, thus improving the product transmittance.

In some embodiments, considering that the channel width-to-length ratio (W/L) of the transistor 107 is positively related to the leakage current of the transistor 107, in order to ensure that the leakage current of the transistor 107 is small, the channel width-to-length ratio (W/L) of the transistor 107 can be set to 1 in the disclosure. In addition, in order to reduce the line break risk of the first electrode 1072 and the second electrode 1073 at a climbing position (the climbing position refers to a position from a metal-free position to a metal-containing position where the gate electrode 1071 is located) in the preparing process. As shown in FIG. 24 and FIG. 25, a line width w₁ of the first electrode 1072 at the climbing position can be set to be larger than a line width w₃ of the first electrode 1072 at a center of the gate electrode 1071, and a line width w₂ of the second electrode 1073 at the climbing position is larger than a line width w₄ of the second electrode 1073 at a center of the gate electrode 1071.

In some embodiments, an active layer 1074 of the transistor 107 can be made of amorphous silicon (a-Si), polycrystalline silicon (poly), oxide (such as IGZO), etc. Since the active layer 1074 is made of amorphous silicon, a Ion coefficient of the transistor 107 is relatively low at 0.85, which cannot meet the high load driving requirements of large-scale high-resolution products. In order to ensure the charging rate of large-scale high-resolution products, the active layer 1074 in the present disclosure can be made of oxide materials, and the Ion coefficient of the corresponding transistor 107 can reach 13.3. In addition, the first electrode 1072 of the transistor 107 in the present disclosure can be a source electrode, the second electrode 1073 is a drain electrode, or the first electrode 1072 of the transistor 107 is a drain electrode, and the second electrode 1073 is a source electrode. The transistor 107 can be a P-type transistor or an N-type transistor, and the transistor 107 can be a bottom gate transistor, a top gate transistor or a double-gate transistor, etc., which is not limited here.

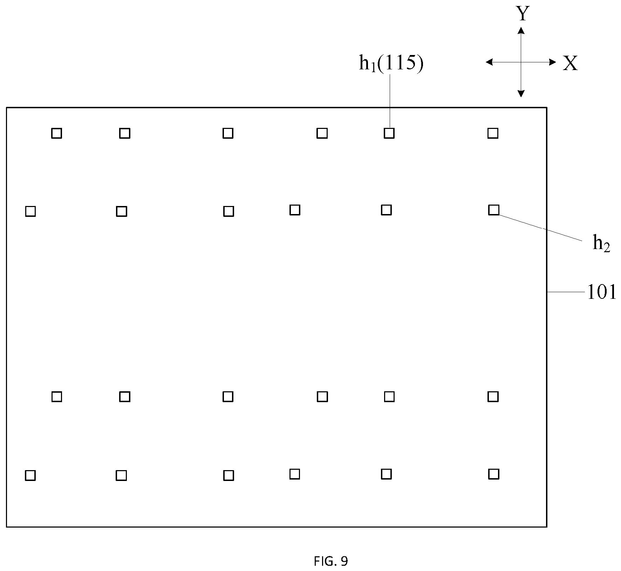

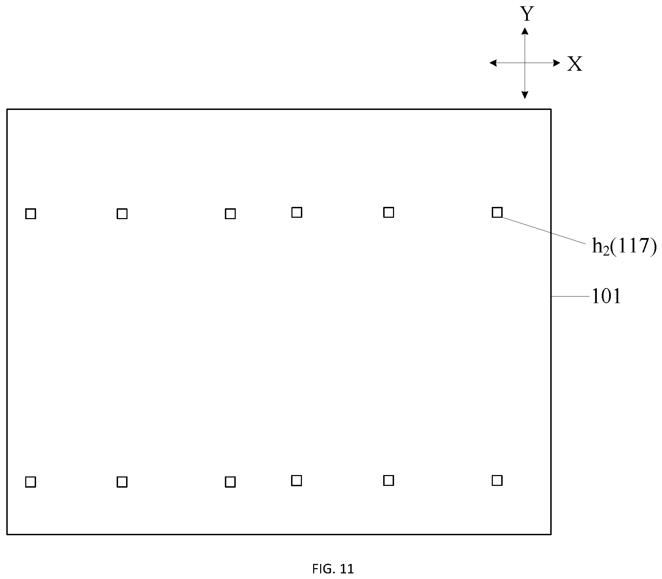

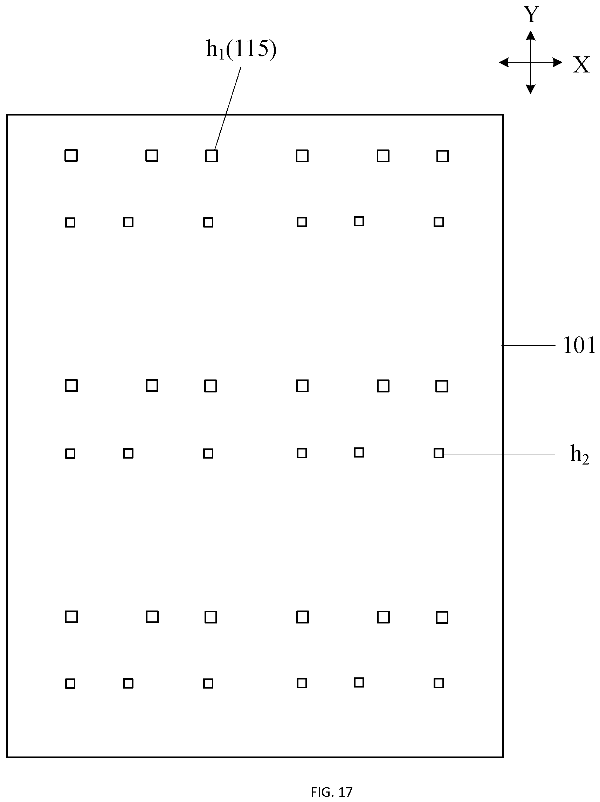

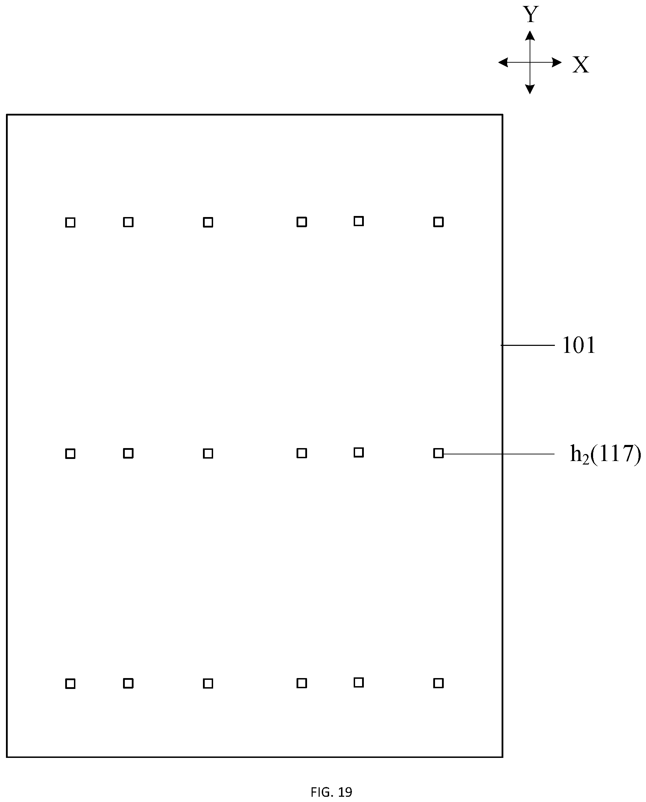

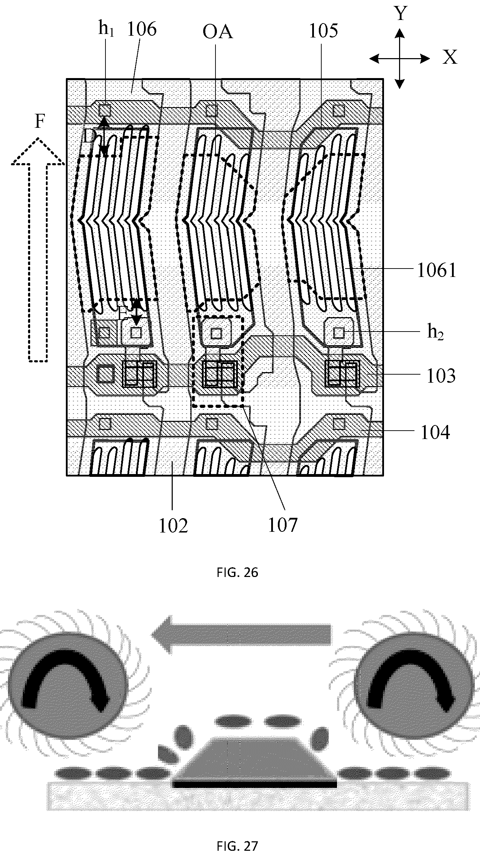

In some embodiments, in the above array substrate provided by embodiments of the present disclosure, as shown in FIGS. 2 to 6, 9, 11 to 14, 17, 19, 20 and 26, the common electrode 106 is located on a side, facing away from the base substrate 101, of a layer where the plurality of pixel electrodes 105 are located. The array substrate further includes a passivation layer 108 between the layer where the plurality of pixel electrodes 105 are located and a layer where the common electrode 106 is located, a planarization layer 109 between the layer where the plurality of pixel electrodes 105 are located and a layer where the plurality of data lines 102 are located, and a gate insulating layer 110 between the layer where the plurality of data lines 102 are located and the layer where the plurality of gate lines 103 are located. The common electrode 106 is electrically connected with the common electrode line 104 through a first via hole h₁ penetrating through the passivation layer 108, the planarization layer 109 and the gate insulating layer 110; a first electrode 1072 of the transistor 107 is electrically connected with the pixel electrode 105 through a second via hole h₂ penetrating through the planarization layer 109. Considering that large-sized or oversized products are placed vertically (i.e. column direction Y) in the actual use process, the first via hole h₁ is located on a side far away from the ground relative to the second via hole h₂. Under the action of gravity, the black matrix will be displaced downward (i.e. toward a direction close to the ground), which may lead to the exposure of the first via hole h₁ far away from the ground. Therefore, in order to ensure that the first via hole h₁ is still covered by the black matrix and does not leak light after misalignment, the present disclosure can be set in the column direction Y, a distance D between the first via hole h₁ and an opening area OA of the sub-pixel area SP (i.e. the mesh area of the black matrix) is greater than a distance E between the second via hole h₂ and the opening area OA of the sub-pixel area SP. Since the opening area OA of the green sub-pixel area G needs to avoid light leakage of the first via hole h₁, the opening areas OA of the blue sub-pixel area B and the red sub-pixel area R need to keep a certain distance from the photo spacer 201 to prevent mura defects caused by the photo spacer 201, resulting in different shapes of the opening areas corresponding to the three colored sub-pixels, as shown in FIG. 26. Optionally, an area of the opening area OA is smaller than an area of a region where the pixel electrode 105 is located, so that in the case of process fluctuations, liquid crystal molecules in the opening area OA can be turned over under the control of an electric field formed by the pixel electrode 105 and the common electrode 106, so as to ensure that light can be transmitted at the opening area OA.

In addition, in the relevant technology, a distance D between a first via hole h₁ and an opening area OA of a sub-pixel area SP (that is, a mesh area of a black matrix) is usually set to be equal to a distance E between a second via hole h₂ and an opening area OA of a sub-pixel area SP. To ensure that the first via hole h₁ and the second via hole h₂ are shielded by the black matrix without light leakage, actual values of the distance D and distance E are the larger value of the two, and the width of the black matrix in the column direction Y is at least twice the larger value. In the present disclosure, by setting the distance D between the first via hole h₁ and the opening area OA (that is, the mesh area of the black matrix) of the sub-pixel area SP to be greater than the distance E between the second via hole h₂ and the opening area OA of the sub-pixel area SP, the width of the black matrix covering both the distance D and distance E in the column direction Y is reduced, which is conductive to improving the opening rate.

In some embodiments, the materials of the passivation layer 108 and the gate insulating layer 110 may be at least one of inorganic insulating materials such as silicon oxide, silicon nitride, silicon nitride oxide, etc. The material of the planarization layer 109 may include at least one of organic insulating materials such as a polymethylmethacrylate (also referred to as an acrylic), a polyacrylic resin, a polyepoxyacrylate resin, a light-sensitive polyimide resin, a polyester acrylic resin, a polyurethane acrylate resin, a phenolics resin, etc., without limitation herein.

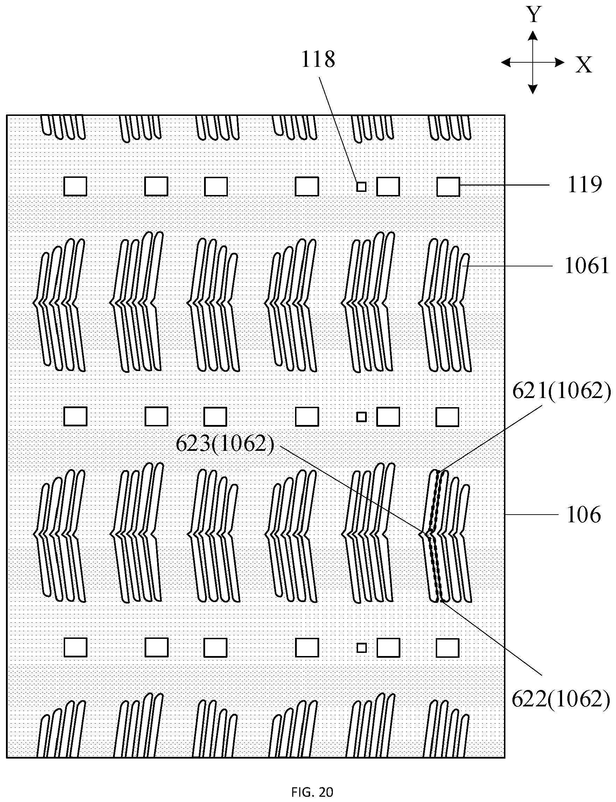

In some embodiments, in the array substrate provided by embodiments of the present disclosure, as shown in FIGS. 20 to 22, the common electrode 106 includes a plurality of slits 1061 located in the sub-pixel area(s) SP; and on the side close to the common electrode line 104, an end of each slit 1061 in the red sub-pixel area R and the blue sub-pixel B is wrapped around the second avoidance portion 1041, so that the slits 1061 in the red sub-pixel area R and the blue sub-pixel B avoid the common electrode line 104, and prevent the backlight from reflecting on the common electrode line 104 to cause bright metal edges.

In some embodiments, in the above array substrate provided by embodiments of the present disclosure, as shown in FIG. 21 and FIG. 22, on the side close to the common electrode line 104, at least some of ends of the slits 1061 in the green sub-pixel area(s) G are uneven, so that the slits 1061 of the green sub-pixel area(s) G avoids the common electrode line 104 and prevents the backlight from reflecting on the common electrode line 104 to cause bright metal edges. And, the size of the slit 1061 in the green sub-pixel area G can also be adjusted to control an actual pattern area of the common electrode 106, so that the storage capacitance (Cst) formed between the common electrode 106 and the pixel electrode 105 is approximately the same in the green sub-pixel area G, the red sub-pixel area R, and the blue sub-pixel area B (that is, the same or within the error range caused by factors such as process and measurement).

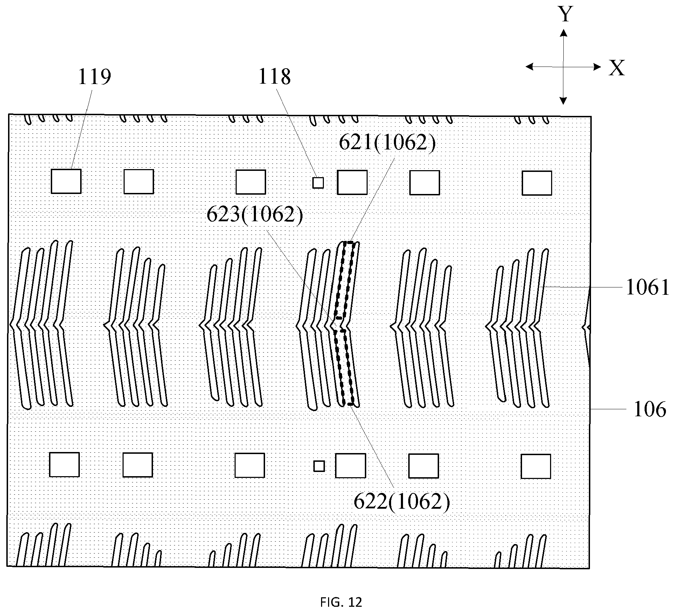

In some embodiments, in the above array substrate provided by embodiments of the present disclosure, as shown in FIGS. 12 and 20, the common electrode 106 can be a dual domain electrode structure. Specifically, a common electrode 106 between two adjacent slits 1061 in the row direction X is a strip electrode 1062; the strip electrode 1062 includes a first domain portion 621 extending in a first direction, a second domain portion 622 extending in a second direction, and an articulating portion 623 connected between the first domain portion 621 and the second domain portion 622; the articulating portion 623 protrudes in a direction far away from the first domain portion 621 and the second domain portion 622; the first direction is crossed with the row direction X and the column direction Y respectively, and the second direction is approximately symmetrically set with the first direction in respect to the row direction X. That is, an included angle between the first direction and the row direction X is equivalent to an included angle between the second direction and the row direction X, or within an error range (e.g. ± 3 °) caused by manufacturing, measurement and other factors.

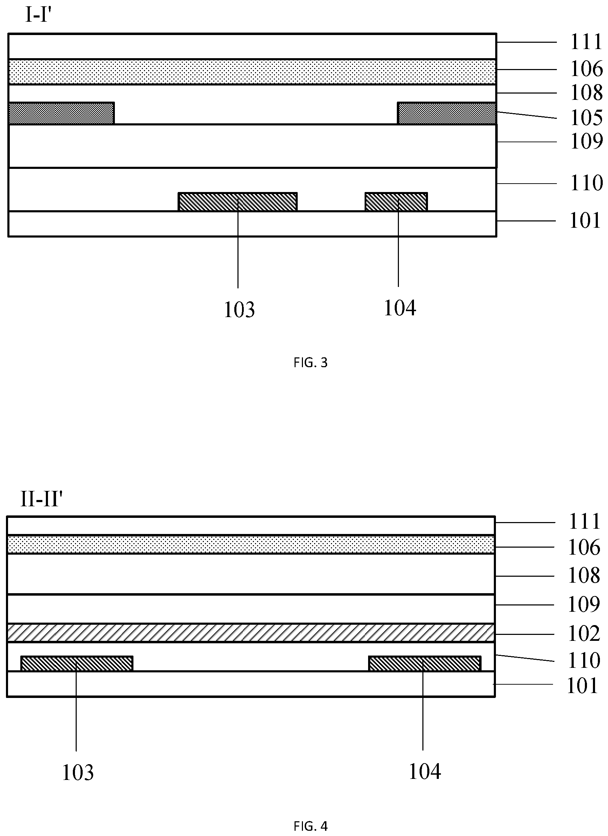

In related technologies, the alignment layer is usually set to make liquid crystal molecules have a pre-tilt direction, which can improve the response speed of liquid crystal deflection. However, as shown in FIG. 27, when the rubbing cloth passes through a position with segment difference, there may be a place where the hair of the rubbing cloth cannot contact (i.e. weak area of alignment), which causes the orientation of the alignment layer in the unconnected area to be weak and affects the pre-tilt direction of the liquid crystal molecules, leading to leakage defects in the 0 gray scale (L0). In order to reduce the influence of the weak area of alignment, in the above array substrate provided by embodiments of the present disclosure, as shown in FIGS. 3 to 5, the alignment layer 111 can be on the side of the layer where the common electrode 106 is located facing away from the base substrate 101, and as shown in FIG. 26, the orientation direction F of the alignment layer 111 is from the second via hole h₂ to the first via hole h₁, which can be specific as the gate line 103 → the sub-pixel area SP → the common electrode line 104. Specifically, the weak area when the gate line 103 (equivalent to a higher position) is oriented towards the sub-pixel area SP (equivalent to a lower position) shown in FIG. 26 corresponds to the weak area of downhill orientation in FIG. 27. The weak area when the sub-pixel area SP (equivalent to a lower position) is oriented towards the common electrode line 104 (equivalent to a higher position) shown in FIG. 26 corresponds to the weak area of uphill orientation in FIG. 27. It can be seen from FIG. 27 that the alignment effect of the weak area of uphill orientation is better than that of the weak area of downhill orientation. Therefore, the present disclosure can make the overall alignment effect better by setting the alignment direction of the alignment layer 111 as the gate line 103 → the sub-pixel area SP → the common electrode line 104, thus reducing the impact of the weak area of alignment on the brightness and contrast of L0.

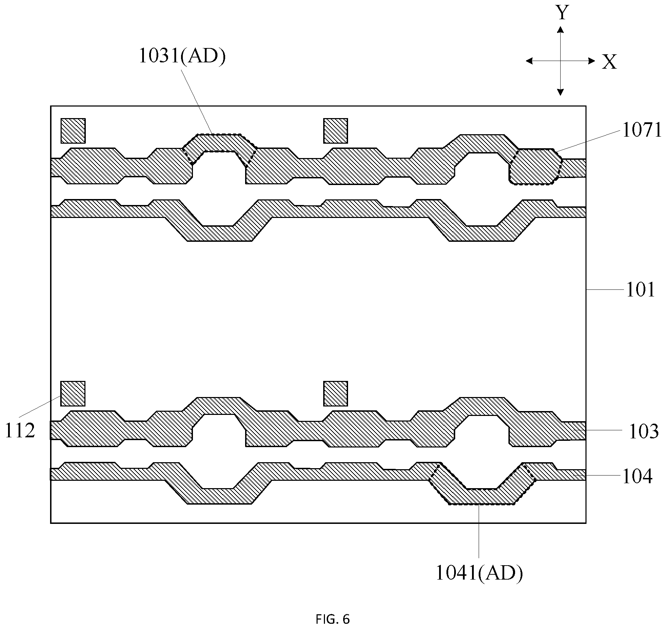

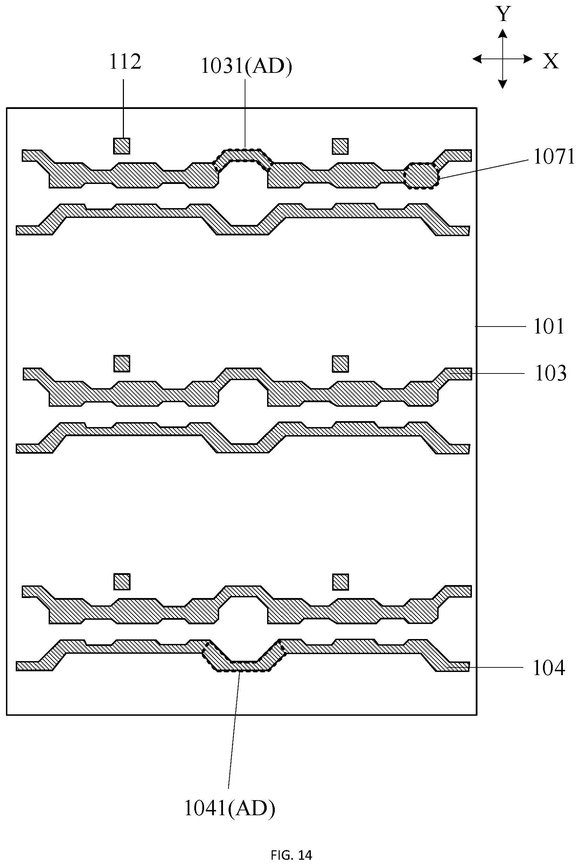

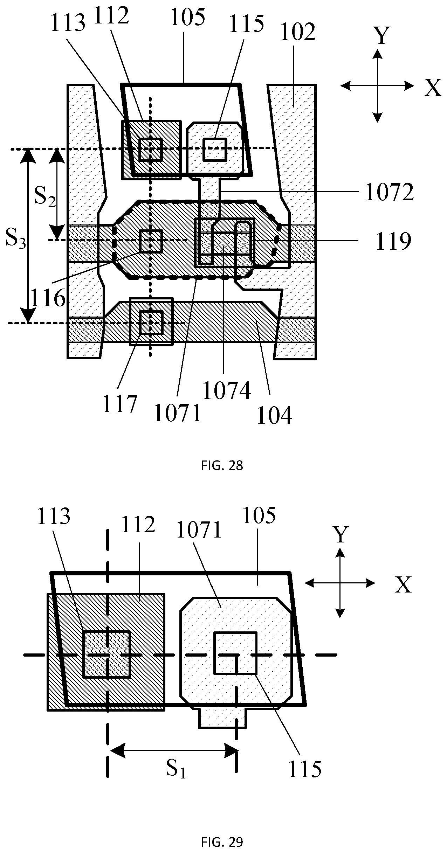

Due to the fact that large-sized or oversized products require splicing exposure on both the long and short sides of the screen, it is not possible to place alignment marks around the display area (AA) for process production monitoring like conventional products (non-splicing or single-sided splicing exposure products). Therefore, in the display area (AA), the disclosure is provided with periodic and regularly distributed alignment marks. Based on this, the above array substrate provided by embodiments of the present disclosure, as shown in FIG. 3, FIG. 6, FIG. 13, FIG. 14 and FIG. 28, may further include a plurality of first alignment marks 112 arranged on the same layer as a plurality of gate lines 103. The first alignment marks 112 are used to realize the alignment between subsequent film layers and the layer where the gate lines 103 are located. It can be seen from FIG. 6 and FIG. 14 that the row gap between the green sub-pixel areas G is large. Therefore, the plurality of first alignment marks 112 can be set at the row gaps between the green sub-pixel areas G, and adjacent to the first electrode 1072 of each transistor 107.

In some embodiments, in the above array substrate provided by embodiments of the present disclosure, as shown in FIGS. 3, 8, 13, 16, 28, and 29, the array substrate may further include a plurality of second alignment marks 113 in the same layer as the plurality of data lines 102, the plurality of second alignment marks 113 are disposed in one-to-one correspondence with a part of the first alignment marks 112 (e.g., first alignment marks in the odd-numbered column), an orthographic projection of the second alignment mark 113 on the base substrate 101 is located within an orthographic projection of the corresponding first alignment mark 112 on the base substrate 101, and an orthographic projection of a center of the second alignment mark 113 on the base substrate 101 and an orthographic projection of a center in the corresponding first alignment mark 112 on the base substrate 101 coincide substantially, i.e., coincide exactly, or are within the range of error due to factors such as fabrication, measurement, and the like. The second alignment mark 113 is used to realize the alignment between the layer where the data lines 102 are located and the layer where the gate lines 103 are located.

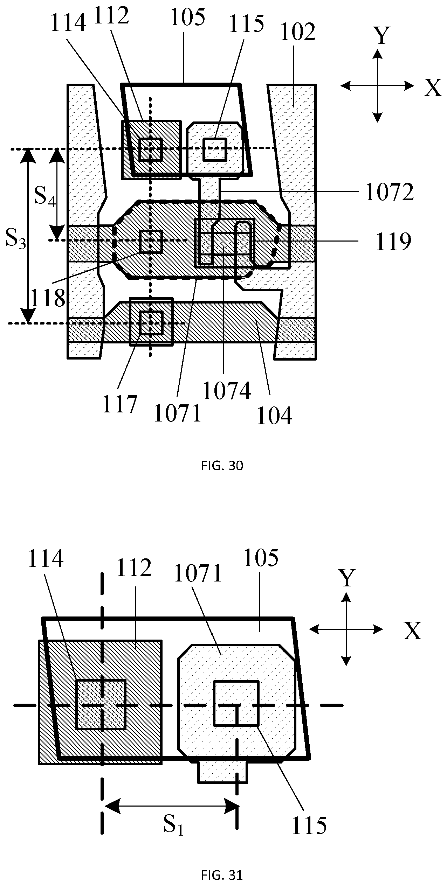

In some embodiments, in the above array substrate provided by embodiments of the present disclosure, as shown in FIGS. 3, 7, 13, 15, 30, and 31, the array substrate further includes a plurality of third alignment marks 114 disposed in the same layer as the active layer 1074 of the transistor 107, the plurality of third alignment marks 114 are disposed in one-to-one correspondence with a part of the first alignment marks 112 (e.g., first alignment marks in even-numbered column), an orthographic projection of the third alignment mark 114 on the base substrate 101 is located within an orthographic projection of the corresponding first alignment mark 112 on the base substrate 101, and an orthographic projection of a center of the third alignment mark 114 on the base substrate 101 coincides substantially with an orthographic projection of a center of the corresponding first alignment mark 112 on the base substrate 101, i.e., it coincides exactly, or is within the range of the error caused by the factors of production, measurement, and the like. The third alignment mark 114 is used to realize the alignment between the active layer 1074 and the layer where the gate lines 103 are located. Moreover, in order to facilitate identification of the second alignment mark 113 and the third alignment mark 114, in the present disclosure, the second alignment marks 113 and the third alignment marks 114 are set in a staggered manner, and are respectively aligned with different first alignment marks 112, respectively.

In some embodiments, in the above array substrate provided by embodiments of the present disclosure, as shown in FIG. 3, FIG. 9, FIG. 13, FIG. 17, and FIG. 28 to FIG. 31, the planarization layer 109 includes a plurality of fourth alignment marks 115 for aligning the planarization layer 109 with the layer where the gate lines 103 are located, and the fourth alignment mark 115 is a hollow pattern, an orthographic projection of the fourth alignment mark 115 on the base substrate 101 is located in an orthographic projection of the first electrode 1072 of the transistor 107 on the base substrate 101. A center of an orthographic projection of the fourth alignment mark 115 on the base substrate 101 is set collinear with a center of an orthographic projection of the first alignment mark 112 on the base substrate 101 along the row direction X. Optionally, between the two center orthographic projections has a first preset distance S₁ along the row direction X, for example, the first preset distance S₁ is 16.25 µm.

In some embodiments, in the above array substrate provided by embodiments of the present disclosure, as shown in FIG. 3, FIG. 10, FIG. 13, FIG. 18 and FIG. 28, the array substrate further includes a plurality of fifth alignment marks 116. The fifth alignment marks 116 are arranged in the same layer as the plurality of pixel electrodes 105, and are used to realize the alignment between the layer where the pixel electrodes 105 are located and the layer where the gate lines 103 are located. An orthographic projection of the fifth alignment mark 116 on the base substrate 101 is located in an orthographic projection of the gate electrode 1071 of the transistor 107 on the base substrate 101. A center of an orthographic projection of the fifth alignment mark 116 on the base substrate 101 is set collinear along the column direction Y with a center of an orthographic projection of the first alignment mark 112 on the base substrate 101. Optionally, between the two center orthographic projections has a second preset distance S₂ along the column direction Y, for example, the second preset distance S₂ is 22 µm.

In some embodiments, in the above array substrate provided by embodiments of the present disclosure, as shown in FIG. 3, FIG. 11, FIG. 13, FIG. 19, FIG. 28 and FIG. 30, the passivation layer 108 includes a plurality of sixth alignment marks 117 for realizing the alignment between the passivation layer 108 and the layer where the gate lines 103 are located, and the sixth alignment mark 117 is a hollow pattern. An orthographic projection of the sixth alignment mark 117 on the base substrate 101 is located in an orthographic projection of the common electrode line 104 on the base substrate 101. A center of an orthographic projection of the sixth alignment mark 117 on the base substrate 101 is set collinear with a center of an orthographic projection of the first alignment mark 112 on the base substrate 101 along the column direction Y. Optionally, between the two center orthographic projections has a third preset distance S₃ along the column direction Y, for example, the third preset distance S₃ is 45.75 µm.

In some embodiments, in the above array substrate provided by embodiments of the present disclosure, as shown in FIG. 3, FIG. 12, FIG. 13, FIG. 20, FIG. 28, FIG. 30 and FIG. 32, the common electrode 106 can further include a plurality of seventh alignment marks 118 for aligning between the layer where the common electrode 106 is located and the layer where the gate lines 103 are located, and the seventh alignment marks 118 are hollow patterns. An orthographic projection of the seventh alignment mark 118 on the base substrate 101 is located in an orthographic projection of the gate electrode 1071 of the transistor 107 on the base substrate 101. A center of an orthographic projection of the seventh alignment mark 118 on the base substrate 101 is set collinear along the column direction Y with a center of an orthographic projection of the first alignment mark 112 on the base substrate 101. A center of an orthographic projection of the seventh alignment mark 118 on the base substrate 101 is arranged collinear along the row direction X with a center of an orthographic projection of a channel area C of the transistor 107 on the base substrate 101. Optionally, a center of an orthographic projection of the seventh alignment mark 118 on the base substrate 101 and a center of an orthographic projection of the first alignment mark 112 on the base substrate 101 have a fourth preset distance S₄ therebetween in the column direction Y, for example, the fourth preset distance S₄ is 22 µm. A center of an orthographic projection of the seventh alignment mark 118 on the base substrate 101 and a center of an orthographic projection of a channel area C of the transistor 107 on the base substrate 101 have a fifth preset distance S₅ therebetween in the row direction X, for example, the fifth preset distance S₅ is 17.6 µm.

In some embodiments, in the above array substrate provided by embodiments of the present disclosure, as shown in FIG. 3, FIG. 12, FIG. 13, FIG. 20, FIG. 28, FIG. 30 and FIG. 32, the common electrode 106 can further include a plurality of eighth alignment marks 119 for realizing the alignment between the layer where the common electrode 106 is located and the layer where the data lines 102 are located. The eighth alignment marks 119 are hollow patterns. An orthographic projection of the eighth alignment mark 119 on the base substrate 101 is located in an orthographic projection of the gate electrode 1071 of the transistor 107 on the base substrate 101. A center of an orthographic projection of the eighth alignment mark 119 on the base substrate 101 is arranged collinear along the row direction X with a center of an orthographic projection of the seventh alignment mark 118 on the base substrate 101. A center of an orthographic projection of the eighth alignment mark 119 on the base substrate 101 is arranged collinear along the column direction Y with a center of an orthographic projection of a channel area C of the transistor 107 on the base substrate 101. In the case of small pixels and low opening rate, the alignment deviation of the common electrode 106 is easy to cause dark lines defect. In the disclosure, the layer where the common electrode 106 is located can be aligned with the layer where the gate lines 103 are located through the seventh alignment mark 118, and at the same time, the layer where the common electrode 106 is located can be aligned with the layer where the data lines 102 are located through the eighth alignment mark 119. The double alignment method is conducive to improving the alignment accuracy of the common electrode 106 and reducing the probability of dark lines defect due to the alignment deviation of the common electrode 106.

Based on the same inventive concept, embodiments of the present disclosure provide a method for manufacturing the array substrate, and since the manufacturing method solves a problem in a similar way to that of the above array substrate, the implementations of the manufacturing method provided in the embodiments of the present disclosure can refer to the implementations of the above array substrate provided in the embodiments of the present disclosure, and repetition will not be repeated.

Optionally, embodiments of the present disclosure provide a method for manufacturing the array substrate, including the follow steps:
providing a base substrate, where the base substrate includes a plurality of sub-pixel areas arranged in an array;
forming a plurality of data lines at column gaps of the plurality of sub-pixel areas, and forming a plurality of gate lines and a plurality of common electrode lines at row gaps of the plurality of sub-pixel areas; where at least part of the plurality of data lines include a widened portion for supporting a photo spacer; and at least one of at least part of the plurality of gate lines and at least part of the plurality of common electrode lines includes an avoidance portion wrapped around the widened portion.

It should be noted that in the above manufacturing method provided by embodiments of the present disclosure, the composition process involved in forming each layer structure can not only include some or all process procedures such as deposition, photoresist coating, masking use the mask, exposure, development, etching, photoresist stripping, but also include other process procedures. The specific content shall be subject to the figures forming the required composition in the actual production process, and there is no limitation here. For example, the post baking process may also be included after development and before etching. Here, the deposition process can be chemical vapor deposition, plasma enhanced chemical vapor deposition or physical vapor deposition, which is not limited here. The mask used in the mask process can be a half tone mask, a single slit mask or a gray tone mask, which is not limited here. Etching can be dry etching or wet etching, which is not limited here.

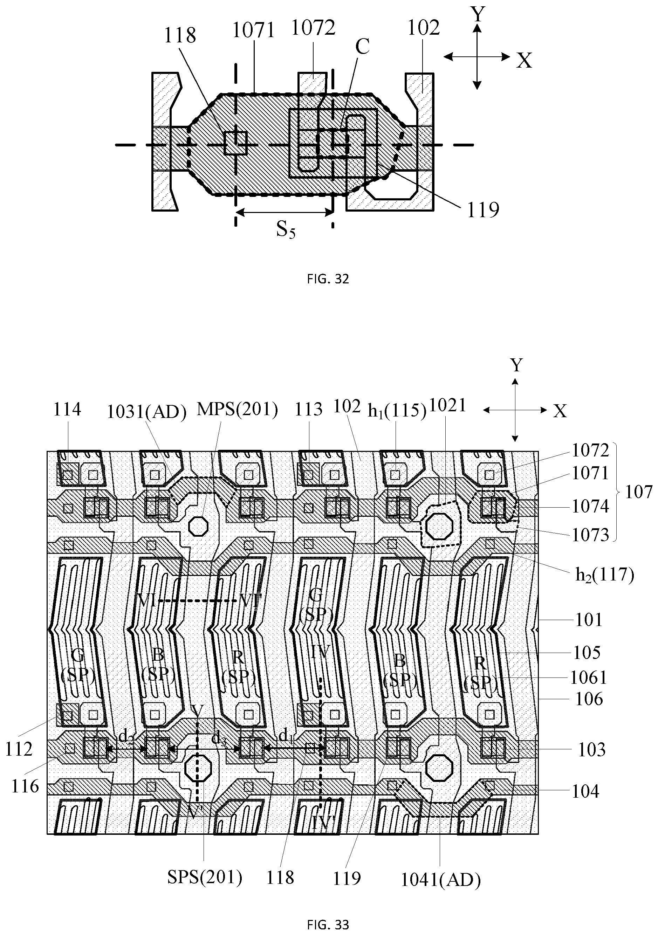

Based on the same inventive concept, the embodiments of the present disclosure provide a display apparatus, as shown in FIGS. 33 to 36, including an array substrate 001 and an opposing substrate 002 opposite with each other, and a liquid crystal layer 003 between the array substrate 001 and the opposing substrate 002, and the array substrate 001 is the above array substrate provided by the embodiments of the present disclosure. Since the display apparatus solves a problem in a similar manner to that of the above array substrate, the implementations of the display apparatus provided in the embodiments of the present disclosure can refer to the implementations of the above array substrate provided in the embodiments of the present disclosure, and the repetition will not be repeated.

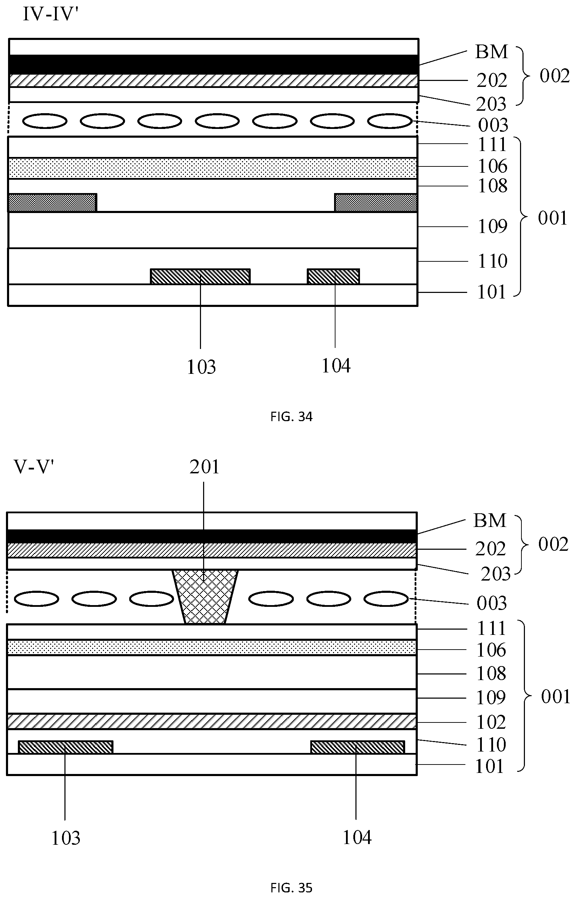

In some embodiments, in the above display apparatus provided by embodiments of the present disclosure, as shown in FIGS. 33 and 35, the opposing substrate 002 includes a photo spacer 201, and the size of the photo spacer 201 gradually decreases in a direction toward the array substrate 001. Optionally, the photo spacer 201 includes a main photo spacer MPS and a secondary photo spacer SPS. Since the main photo spacer MPS serves as the main support, a distance between an edge of the MPS and an edge of the widened portion 1021 is the main consideration for preventing the poor dark DNU. Due to the alignment accuracy of an array substrate 001 and an opposing substrate 002 in the related technologies being 5 µm, a distance between an edge of the main photo spacer MPS and an edge of the widened portion 1021 should be at least greater than or equal to 5 µm, at the same time, to ensure the opening rate, the widened portion 1021 should not be too large. Based on this, in the disclosure, an orthographic projection of an end of the main photo spacer MPS close to the array substrate 001 on the base substrate 101 is located in an orthographic projection of the widened portion 1021 on the base substrate 101; a distance between an edge of the orthographic projection of the widened portion 1021 on the base substrate 101 and an edge of the orthographic projection of the end of the main photo spacer MPS close to the array substrate 001 on the base substrate 101 is greater than or equal to 5 µm and less than or equal to 10 µm, for example, 5µm, 6 µm,7 µm, 8 µm, 9 µm, 10 µm, etc., to ensure that the main photo spacer MPS will not slip out of the widened portion 1021 when sliding, so as to better maintain the uniformity of box thickness. Optionally, the size of the secondary photo spacer SPS is larger than the size of the main photo spacer MPS, and accordingly, the distance between the edge of the secondary photo spacer SPS and the edge of the widened portion 1021 is smaller than the distance between the edge of the main photo spacer MPS and the edge of the widened portion 1021. In some embodiments, the center of the secondary photo spacer SPS is aligned with the center of the main photo spacer MPS along the row direction X.

In some embodiments, in the above display apparatus provided by embodiments of the present disclosure, a distance between an orthographic projection of an avoidance portion AD (such as the first avoidance portion 1031 and the second avoidance portion 1041) on the base substrate 101 and an orthographic projection of an end of a main photo spacer MPS close to the array substrate 001 on the base substrate 101 is greater than or equal to 15 µm and less than or equal to 20 µm. Considering the dislocation of the oversized array substrate 001 and the opposing substrate 002, the distance between the orthographic projection of the avoidance portion AD (such as the first avoidance portion 1031 and the second avoidance portion 1041) on the base substrate 101 and the orthographic projection of the end of the main photo spacer MPS close to the array substrate 001 on the base substrate 101 should be greater than or equal to 10 µm added the box alignment accuracy (i.e., the distance ≥ 10 µm + the box alignment accuracy). It can be understood that in the worst scenario for the box alignment, after considering the accuracy value of the offset between the array substrate 001 and the opposing substrate 002 after the box alignment, the longitudinal misalignment between the array substrate 001 and the opposing substrate 002 should be at least 10 µm. At this time, the display device can display normally and there is no snowflake Mura. Therefore, the distance between the orthographic projection of the avoidance portion AD (such as the first avoidance portion 1031 and the second avoidance portion 1041) on the base substrate 101 and the orthographic projection of the end of the main photo spacer MPS close to the array substrate 001 on the base substrate 101 is greater than or equal to 15 µm. In order to ensure the opening ratio, the distance between the orthographic projection of the avoidance portion AD (such as the first avoidance portion 1031 and the second avoidance portion 1041) on the base substrate 101 and the orthographic projection of the end of the main photo spacer MPS close to the array substrate 001 on the base substrate 101 should not be too large. In the present disclosure, the distance between the orthographic projection of the avoidance portion AD (such as the first avoidance portion 1031 and the second avoidance portion 1041) on the base substrate 101 and the orthographic projection of the end of the main photo spacer MPS close to the array substrate 001 on the base substrate 101 is less than or equal to 20 µm.

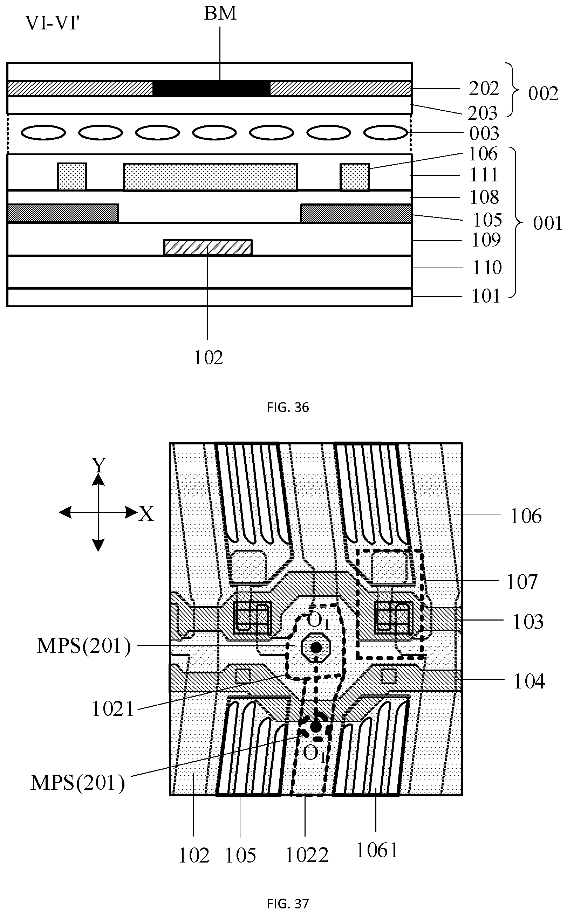

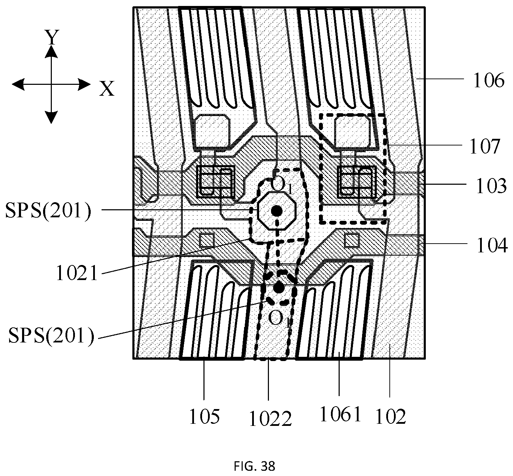

In some embodiments, in the above display apparatus provided by embodiments of the present disclosure, as shown in FIGS. 37 and 38, the data line 102 includes a wire portion 1022 whose orthographic projection overlaps with the common electrode line 104. The wire portion 1022 extends at an incline in a predetermined direction (such as to the left) with respect to the column direction Y; and a center O₁ of an orthographic projection of the photo spacer 201 on the base substrate 101 is offset along the predetermined direction (such as to the left) with respect to a symmetry axis of the wire portion 1022 in an extension direction (i.e., a centerline line along a width direction of the wire portion 1022). Combining FIGS. 37 and 38, it can be seen that there are patterns of the layer where the data lines 103 are located in the upper, lower, and left directions of the widened portion 1021. By setting the photo spacer 201 to the left, more areas are reserved on the right side of the photo spacer 201 to accommodate the widened portion 1021. This ensures that the center O₁ of the photo spacer 201 can be located at the center of the data line 102 before and after sliding under force, without affecting normal support function. If the positioning design of the photo spacer 201 is not used to offset along the preset direction (such as to the left), the center of the photo spacer 201 will deviate from the center of the data line 102 after sliding under force, and the photo spacer 201 is likely to fall off the data line 102. The inconsistent position of the photo spacer 201 in the entire display device will lead to differences in box thickness and cause dark DNU defects.

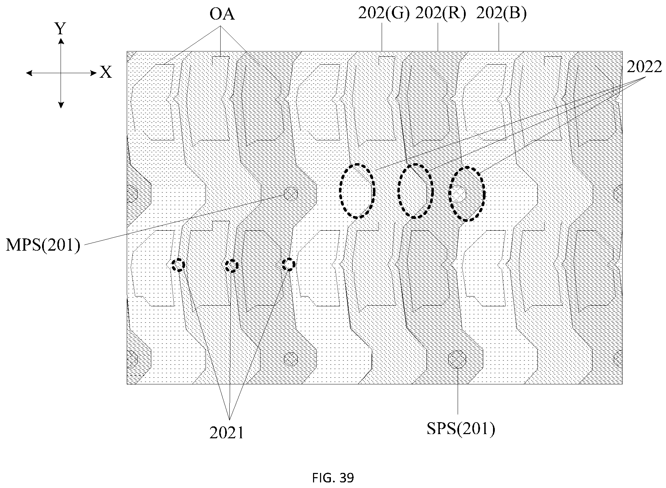

In some embodiments, in the above display apparatus provided by embodiments of the present disclosure, as shown in FIG. 39, the opposing substrate can also include a plurality of color resistors 202, the color resistors 202 are in one-to-one correspondence with columns of sub-pixel areas SP, and the plurality of color resistors 202 can include red color resistors corresponding to columns where the red sub-pixel areas R are located, green color resistors corresponding to columns where the green sub-pixel areas G are located, and blue color resistors corresponding to columns where the blue sub-pixel areas B are located. The plurality of color resistors 202 extend in a zigzag direction in the column direction Y. Optionally, the boundary that the color resistor 202 extends in the column direction Y can be zigzag lines, curve lines, etc., which is not limited here. The color resistor 202 zigzagging in the column direction Y can cooperate with the dual domain electrode in the array substrate 001 to achieve a better color display effect. At the same time, the matching design of the color resistor 202 and pixel electrode 105 can increase the opening ratio. Referring further to FIG. 39, it can be seen that the color resistor 202 includes a plurality of convex portions 2021, the plurality of convex portions 2021 correspond to articulating portions 623 of the common electrodes 106 at edges of the sub-pixel areas SP. In some embodiments, the red color resistor can be made first, and then the blue color resistor is made. Considering the flatness of the support surface on which the photo spacer 201 is located, the photo spacer 201 between the red sub-pixel area R and the blue sub-pixel area B in the disclosure is located on each red color resistor, and the red color resistor is provided with bend portions 2022 to support the photo spacer 201. Accordingly, the green color resistor and the blue color resistor are also provided with bend portions at positions corresponding to the bend portions 2022 of the red color resistor. That is, each color resistor 202 can further include a plurality of bend portions 2022, and the bend portions 2022 are located between opening areas OA of adjacent sub-pixel areas SP in the same column, as shown in FIG. 39.

In some embodiments, in the above display apparatus provided in embodiments of the present disclosure, the display apparatus may further include a sealant that surrounds a liquid crystal layer 003 between the array substrate 001 and the opposing substrate 002, a protective layer 203 disposed on a side of the opposing substrate 002 close to the liquid crystal layer 003, an alignment layer disposed on a side of the protective layer 203 close to the liquid crystal layer 003, a first polarizer disposed on a side of the array substrate 001 facing away from the liquid crystal layer 003, and a second polarizer disposed on a side of the opposing substrate 002 facing away from the liquid crystal layer 003, where a polarization direction of the first polarizer is perpendicular to a polarization direction of the second polarizer.

In some embodiments, the above display apparatus provided in embodiments of the present disclosure can further include a backlight module, and a liquid crystal cell composed of the array substrate 001 and the opposing substrate 002 is arranged on a light exiting side of the backlight module. The backlight module can be a direct-lit backlight module or an edge-lit backlight module. Optionally, the edge-lit backlight module may include light bars, stacked reflective sheets, light guide plates, diffusion sheets, prism groups, etc. The light bars are located on one side in a thickness direction of the light guide plate. The direct-lit backlight module may include a matrix light source, and a reflective sheet, a diffusion plate, a brightness enhancement film, etc. that are stacked on a light exiting side of the matrix light source. The reflective sheet includes openings that are positioned opposite to the positions of each lamp bead in the matrix light source. The lamp beads in the light bars and the lamp beads in the matrix light source can be light-emitting diodes (LEDs), such as micro-light-emitting diodes (Mini LED, Micro LED, etc.).

Miniature light-emitting diodes at the sub-millimeter or even micron level are self-luminous devices like organic light-emitting diodes (OLEDs). Like organic light-emitting diodes, it has a series of advantages such as high brightness, ultra-low latency, and ultra-large viewing angle. Moreover, due to the fact that inorganic light-emitting diodes emit light based on metal semiconductors with more stable properties and lower resistance, they have the advantages of lower power consumption, better resistance to high and low temperatures, and longer service life compared to organic light-emitting diodes that emit light based on organic compounds. When micro light-emitting diodes are used as backlight sources, more precise dynamic backlighting effects can be achieved, effectively improving screen brightness and contrast while also solving the glare phenomenon caused by traditional dynamic backlighting between bright and dark areas of the screen, optimizing the visual experience.

In some embodiments, the display apparatus according to embodiments of the disclosure may be any product or component having a display function, such as a projector, a three dimensional (3D) printer, a virtual reality device, a mobile phone, a tablet computer, a television, a display, a notebook computer, a digital photo frame, a navigator, a smart watch, a fitness wristband, and a personal digital assistant. The display apparatus may include, but is not limited to, a radio frequency unit, a network module, an audio output-input unit, a sensor, a display unit, a user input unit, an interface unit, a control chip, and other components. In some embodiments, the control chip is a central processing unit, a digital signal processor, a system-on-a-chip (SoC), etc. For example, the control chip may further include a memory, a power module, etc., and power supply and signal input and output functions are achieved through additionally arranged wires and signal lines. For example, the control chip may further include a hardware circuit and a computer executable code. The hardware circuit may include a conventional very large scale integration (VLSI) circuit or a gate array and existing semiconductors such as a logic chip and a transistor or other discrete elements. The hardware circuit may further include a field programmable gate array, a programmable array logic, a programmable logic device, etc. In addition, those skilled in the art can understand that the above structure does not limit the display apparatus according to the embodiments of the disclosure. That is, the display apparatus according to the embodiments of the disclosure may include more or less components, or combine some components, or have different component arrangements.

## Claims

1. An array substrate, comprising:
a base substrate (101), comprising a plurality of sub-pixel areas (SP) arranged in an array;
a plurality of data lines (102), disposed at column gaps of the plurality of sub-pixel areas (SP),
wherein at least part of the plurality of data lines (102) comprise a widened portion (1021) for supporting a photo spacer; and
a plurality of gate lines (103) and a plurality of common electrode lines (104), disposed at row gaps of the plurality of sub-pixel areas (SP); wherein the plurality of gate lines (103) and the plurality of common electrode lines (104) are disposed on a different layer from the plurality of data lines (102), and at least part of the plurality of gate lines (103) and at least part of the plurality of common electrode lines (104) comprise an avoidance portion wrapped around the widened portion (1021) to avoid the widened portion (1021);
wherein the at least part of the plurality of gate lines (103) comprise a first avoidance portion wrapped around the widened portion (1021), and the at least part of the plurality of common electrode lines (104) comprise a second avoidance portion wrapped around the widened portion (1021).

2. The array substrate according to claim 1, wherein the plurality of sub-pixel areas (SP) comprise a plurality of red sub-pixel areas, a plurality of green sub-pixel areas, and a plurality of blue sub-pixel areas;
wherein columns where the red sub-pixel areas are located, columns where the green sub-pixel areas are located, and columns where the blue sub-pixel areas are located are provided in alternating cycles in a row direction, and data lines (102) at column gaps between the columns where the red sub-pixel areas are located and the columns where the blue sub-pixel areas are located comprise the widened portion (1021).

3. The array substrate according to claim 2, wherein an orthographic projection of the gate line (103) on the base substrate (101) comprises a first boundary far away from an orthographic projection of the widened portion (1021) on the base substrate (101); and
the array substrate further comprises a plurality of pixel electrodes located in at least the plurality of sub-pixel areas (SP); an orthographic projection of each pixel electrode on the base substrate (101) comprises a second boundary disposed close to the first boundary, and at least part of second boundaries are approximately parallel to an adjacent first boundary, respectively.

4. The array substrate according to claim 3, wherein an orthographic projection of the pixel electrode in the green sub-pixel area on the base substrate (101) does not overlap with an orthographic projection of the common electrode line (104) on the base substrate (101);
an orthographic projection of the pixel electrode in the red sub-pixel area on the base substrate (101) and an orthographic projection of the pixel electrode in the blue sub-pixel area on the base substrate (101) partially overlap with the orthographic projection of the common electrode line (104) on the base substrate (101), respectively;
wherein an area of the orthographic projection of the pixel electrode in the red sub-pixel area on the base substrate (101) is Sr, an area of the orthographic projection of the pixel electrode in the green sub-pixel area on the base substrate (101) is Sg, an area of the orthographic projection of the pixel electrode in the blue sub-pixel area on the base substrate (101) is Sb, and a ratio of Sg:Sb:Sr is (909^{~}1687):(930^{~}1727):(946^{~}1758);
wherein a difference between a charging rate of the red sub-pixel area and a charging rate of the green sub-pixel area is greater than or equal to 0 and less than 0.003, and a charging rate of the blue sub-pixel area is approximately same as the charging rate of the red sub-pixel area.

5. The array substrate according to any one of claims 2 to 4, further comprising a plurality of transistors located at the row gaps of the plurality of sub-pixel areas; wherein:
a distance between a transistor located between red sub-pixel areas and a transistor located between green sub-pixel areas is d₁;
a distance between a transistor located between green sub-pixel areas and a transistor located between blue sub-pixel areas is d₂; and
a distance between a transistor located between blue sub-pixel areas and a transistor located between red sub-pixel areas is d₃;
wherein d₂ <d₁ <d₃;
wherein a shape of a channel area of the transistor is in a "straight line" shape, carriers in the channel area of the transistor migrate along a row direction, a length of the channel area of the transistor in the row direction is a; a local part of the gate line (103) is multiplexed as a gate electrode of the transistor, and a line width of the gate electrode of the transistor in a column direction is A; wherein a/A is greater than or equal to 1/5 and less than or equal to 2/3.

6. The array substrate according to claim 5, further comprising:
a common electrode disposed on a side of a layer where the plurality of pixel electrodes are located facing away from the base substrate (101);
a passivation layer disposed between the layer where the plurality of pixel electrodes are located and a layer where the common electrode is located;
a planarization layer disposed between the layer where the plurality of pixel electrodes are located and a layer where the plurality of data lines (102) are located; and
a gate insulating layer disposed between the layer where the plurality of data lines (102) are located and a layer where the plurality of gate lines (103) are located;
wherein the common electrode is electrically connected with the common electrode line (104) through a first via hole penetrating through the passivation layer, the planarization layer and the gate insulating layer; a first electrode of the transistor is electrically connected with the pixel electrode through a second via hole penetrating through the planarization layer; and, in the column direction, a distance between the first via hole and an opening area of the sub-pixel area is greater than a distance between the second via hole and the opening area of the sub-pixel area;
wherein the common electrode comprises a plurality of slits in the sub-pixel area; and on a side close to the common electrode line (104), an end of each of the slits in the red sub-pixel area and the blue sub-pixel is wrapped around the second avoidance portion;
wherein, on the side close to the common electrode line (104), at least some of ends of the slits in the green sub-pixel area are uneven.

7. The array substrate according to claim 6, wherein a common electrode between two adjacent slits in the row direction is a strip electrode;
the strip electrode comprises a first domain portion extending in a first direction, a second domain portion extending in a second direction, and an articulating portion connected between the first domain portion and the second domain portion; the articulating portion protrudes in a direction far away from the first domain portion and the second domain portion;
the first direction is crossed with the row direction and the column direction respectively, and the second direction is approximately symmetrically set with the first direction in respect to the row direction.

8. The array substrate according to any one of claims 6 to 7, further comprising: an alignment layer disposed on a side of the layer where the common electrode is located facing away from the base substrate (101), wherein an orientation direction of the alignment layer is from the second via hole to the first via hole.

9. The array substrate according to any one of claims 5 to 8, further comprising: a plurality of first alignment marks disposed in the same layer as the plurality of gate lines (103), wherein the plurality of first alignment marks are disposed at row gaps between the green sub-pixel areas and adjacent to the first electrode of each of the transistors;
further comprising: a plurality of second alignment marks disposed in the same layer with the plurality of data lines (102);
wherein the plurality of second alignment marks are disposed in one-to-one correspondence with some of the first alignment marks;
an orthographic projection of the second alignment mark on the base substrate (101) is located in an orthographic projection of a first alignment mark corresponding to the second alignment mark on the base substrate (101); and
a center of the orthographic projection of the second alignment mark on the base substrate (101) substantially coincides with a center of the orthographic projection of the first alignment mark corresponding to the second alignment mark on the base substrate (101).

10. The array substrate according to claim 9, further comprising: a plurality of third alignment marks disposed in the same layer as an active layer of the transistor;
wherein the plurality of third alignment marks are disposed in one-to-one correspondence with some of the first alignment marks;
the third alignment marks and the second alignment marks correspond to different first alignment marks, respectively;
an orthographic projection of the third alignment mark on the base substrate (101) is located in an orthographic projection of a first alignment mark corresponding to the third alignment mark on the base substrate (101); and
a center of the orthographic projection of the third alignment mark on the base substrate (101) substantially coincides with a center of the orthographic projection of the first alignment mark corresponding to the third alignment mark on the base substrate (101);
wherein a line width of the data line (102) in an area where the first avoidance portion is located is less than a line width of the data line (102) in an area where the second avoidance portion is located.

11. A display apparatus, comprising an array substrate and an opposing substrate opposite with each other, and a liquid crystal layer disposed between the array substrate and the opposing substrate, wherein the array substrate is the array substrate according to any one of claims 1 to 10.

12. The display apparatus according to claim 11, wherein the opposing substrate comprises a main photo spacer;
an orthographic projection of an end of the main photo spacer close to the array substrate on the base substrate (101) is located in an orthographic projection of the widened portion (1021) on the base substrate (101);
a distance between an edge of the orthographic projection of the widened portion (1021) on the base substrate (101) and an edge of the orthographic projection of the end of the main photo spacer close to the array substrate on the base substrate (101) is greater than or equal to 5 µm and less than or equal to 10 µm;
wherein a distance between an orthographic projection of the avoidance portion on the base substrate (101) and the orthographic projection of the end of the main photo spacer close to the array substrate on the base substrate (101) is greater than or equal to 15 µm and less than or equal to 20 µm.

13. The display apparatus according to any one of claims 11 to 12, wherein the opposing substrate comprises a photo spacer; the data line (102) comprises an wire portion whose orthographic projection overlaps with the common electrode line (104); the wire portion extends at an incline in a predetermined direction with respect to a column direction; and a center of an orthographic projection of an end of the photo spacer close to the array substrate on the base substrate (101) is offset along the predetermined direction relative to a symmetry axis of the wire portion in an extension direction;
wherein the opposing substrate further comprises a plurality of color resistors, each of the plurality of color resistors is disposed in correspondence with the sub-pixel areas in each column; and the plurality of color resistors extend in a zigzag direction in the column direction;
wherein each of the plurality of color resistors comprises a plurality of convex portions, and the plurality of convex portions correspond to articulating portions at edges of the sub-pixel areas;
wherein each of the plurality of color resistors further comprises a plurality of bend portions, and the plurality of bend portions are disposed between opening areas of adjacent sub-pixel areas in the same column.

14. A method for manufacturing the array substrate according to any one of claims 1 to 10, comprising:
providing the base substrate (101), wherein the base substrate (101) comprises the plurality of sub-pixel areas arranged in an array; and
forming the plurality of data lines (102) at column gaps of the plurality of sub-pixel areas, and forming the plurality of gate lines (103) and the plurality of common electrode lines (104) at row gaps of the plurality of sub-pixel areas;
wherein at least part of the plurality of data lines (102) comprise the widened portion (1021) for supporting the photo spacer; and at least one of at least part of the plurality of gate lines (103) and at least part of the plurality of common electrode lines (104) comprises an avoidance portion wrapped around the widened portion (1021).

## Patentansprüche

1. Arraysubstrat, umfassend:
ein Basissubstrat (101), das eine Vielzahl von in einem Array angeordneten Subpixelbereichen (SP) umfasst;
eine Vielzahl von Datenleitungen (102), die in Spaltenabständen der Vielzahl von Subpixelbereichen (SP) angeordnet sind, wobei mindestens ein Teil der Vielzahl von Datenleitungen (102) einen verbreiterten Abschnitt (1021) zum Tragen eines Foto-Abstandhalters umfasst; und
eine Vielzahl von Gate-Leitungen (103) und eine Vielzahl von gemeinsamen Elektrodenleitungen (104), die in Zeilenabständen der Vielzahl von Subpixelbereichen (SP) angeordnet sind; wobei die Vielzahl von Gate-Leitungen (103) und die Vielzahl von gemeinsamen Elektrodenleitungen (104) auf einer anderen Schicht als die Vielzahl von Datenleitungen (102) angeordnet sind und mindestens ein Teil der Vielzahl von Gate-Leitungen (103) und mindestens ein Teil der Vielzahl von gemeinsamen Elektrodenleitungen (104) einen Umgehungsabschnitt umfassen, der um den verbreiterten Abschnitt (1021) herumgeführt ist, um den verbreiterten Abschnitt (1021) zu umgehen;
wobei der mindestens eine Teil der Vielzahl von Gate-Leitungen (103) einen ersten Umgehungsabschnitt umfasst, der um den verbreiterten Abschnitt (1021) herumgeführt ist, und der mindestens eine Teil der Vielzahl von gemeinsamen Elektrodenleitungen (104) einen zweiten Umgehungsabschnitt umfasst, der um den verbreiterten Abschnitt (1021) herumgeführt ist.

2. Arraysubstrat nach Anspruch 1, wobei die Vielzahl von Subpixelbereichen (SP) eine Vielzahl von roten Subpixelbereichen, eine Vielzahl von grünen Subpixelbereichen und eine Vielzahl von blauen Subpixelbereichen umfasst;
wobei Spalten, in denen die roten Subpixelbereiche angeordnet sind, Spalten, in denen die grünen Subpixelbereiche angeordnet sind, und Spalten, in denen die blauen Subpixelbereiche angeordnet sind, in einer Zeilenrichtung in abwechselnden Zyklen vorgesehen sind und Datenleitungen (102) in Spaltenabständen zwischen den Spalten, in denen die roten Subpixelbereiche angeordnet sind, und den Spalten, in denen die blauen Subpixelbereiche angeordnet sind, den verbreiterten Abschnitt (1021) umfassen.

3. Arraysubstrat nach Anspruch 2, wobei eine orthogonale Projektion der Gate-Leitung (103) auf das Basissubstrat (101) eine erste Begrenzung umfasst, die deutlich beabstandet von einer orthogonalen Projektion des verbreiterten Abschnitts (1021) auf das Basissubstrat (101) angeordnet ist; und
das Arraysubstrat ferner eine Vielzahl von Pixelelektroden umfasst, die in mindestens der Vielzahl von Subpixelbereichen (SP) angeordnet sind; eine orthogonale Projektion jeder Pixelelektrode auf das Basissubstrat (101) eine zweite Begrenzung umfasst, die nahe an der ersten Begrenzung angeordnet ist, und mindestens ein Teil der zweiten Begrenzungen jeweils annähernd parallel zu einer benachbarten ersten Begrenzung verläuft.

4. Arraysubstrat nach Anspruch 3, wobei sich eine orthogonale Projektion der Pixelelektrode in dem grünen Subpixelbereich auf das Basissubstrat (101) nicht mit einer orthogonalen Projektion der gemeinsamen Elektrodenleitung (104) auf das Basissubstrat (101) überlappt;
sich eine orthogonale Projektion der Pixelelektrode in dem roten Subpixelbereich auf das Basissubstrat (101) und eine orthogonale Projektion der Pixelelektrode in dem blauen Subpixelbereich auf das Basissubstrat (101) jeweils teilweise mit der orthogonalen Projektion der gemeinsamen Elektrodenleitung (104) auf das Basissubstrat (101) überlappen;
wobei eine Fläche der orthogonalen Projektion der Pixelelektrode in dem roten Subpixelbereich auf das Basissubstrat (101) Sr beträgt, eine Fläche der orthogonalen Projektion der Pixelelektrode in dem grünen Subpixelbereich auf das Basissubstrat (101) Sg beträgt, eine Fläche der orthogonalen Projektion der Pixelelektrode in dem blauen Subpixelbereich auf das Basissubstrat (101) Sb beträgt und ein Verhältnis von Sg:Sb:Sr (909-1687): (930~1727) : (946~1758) beträgt;
wobei eine Differenz zwischen einer Aufladerate des roten Subpixelbereichs und einer Aufladerate des grünen Subpixelbereichs größer oder gleich 0 und kleiner als 0,003 ist und eine Aufladerate des blauen Subpixelbereichs annähernd gleich der Aufladerate des roten Subpixelbereichs ist.

5. Arraysubstrat nach einem der Ansprüche 2 bis 4, das ferner eine Vielzahl von Transistoren umfasst, die im Bereich der Zeilenabstände der Vielzahl von Subpixelbereichen angeordnet sind; wobei:
ein Abstand zwischen einem zwischen roten Subpixelbereichen angeordneten Transistor und einem zwischen grünen Subpixelbereichen angeordneten Transistor d₁ beträgt;
ein Abstand zwischen einem Transistor, der zwischen grünen Subpixelbereichen angeordnet ist, und einem Transistor, der zwischen blauen Subpixelbereichen angeordnet ist, d₂ beträgt; und
ein Abstand zwischen einem Transistor, der zwischen blauen Subpixelbereichen angeordnet ist, und einem Transistor, der zwischen roten Subpixelbereichen angeordnet ist, d₃ beträgt;
wobei d₂ < d₁ < d₃ gilt;
wobei eine Form eines Kanalbereichs des Transistors "geradlinig" ist, Ladungsträger in dem Kanalbereich des Transistors entlang einer Zeilenrichtung wandern und eine Länge des Kanalbereichs des Transistors in Zeilenrichtung a beträgt; ein lokaler Teil der Gate-Leitung (103) als Gate-Elektrode des Transistors multiplexiert ist und eine Leitungsbreite der Gate-Elektrode des Transistors in Spaltenrichtung A beträgt; wobei a/A größer oder gleich 1/5 und kleiner oder gleich 2/3 ist.

6. Arraysubstrat nach Anspruch 5, ferner umfassend:
eine gemeinsame Elektrode, die auf einer dem Basissubstrat (101) abgewandten Seite einer Schicht angeordnet ist, in der die Vielzahl von Pixelelektroden angeordnet ist;
eine Passivierungsschicht, die zwischen der Schicht, in der die Vielzahl von Pixelelektroden angeordnet ist, und einer Schicht, in der die gemeinsame Elektrode angeordnet ist, angeordnet ist;
eine Planarisierungsschicht, die zwischen der Schicht, in der die Vielzahl von Pixelelektroden angeordnet ist, und einer Schicht, in der die Vielzahl von Datenleitungen (102) angeordnet ist, angeordnet ist; und
eine Gate-Isolierschicht, die zwischen der Schicht, in der die Vielzahl von Datenleitungen (102) angeordnet ist, und einer Schicht, in der die Vielzahl von Gate-Leitungen (103) angeordnet ist, angeordnet ist;
wobei die gemeinsame Elektrode über eine erste Durchkontaktierung, welche die Passivierungsschicht, die Planarisierungsschicht und die Gate-Isolierschicht durchdringt, elektrisch mit der gemeinsamen Elektrodenleitung (104) verbunden ist; eine erste Elektrode des Transistors über eine zweite Durchkontaktierung, welche die Planarisierungsschicht durchdringt, elektrisch mit der Pixelelektrode verbunden ist; und in Spaltenrichtung ein Abstand zwischen der ersten Durchkontaktierung und einem Öffnungsbereich des Subpixelbereichs größer ist als ein Abstand zwischen der zweiten Durchkontaktierung und dem Öffnungsbereich des Subpixelbereichs;
wobei die gemeinsame Elektrode eine Vielzahl von Schlitzen in dem Subpixelbereich umfasst; und auf einer der gemeinsamen Elektrodenleitung (104) nahen Seite ein Ende jedes der Schlitze in dem roten Subpixelbereich und in dem blauen Subpixelbereich um den zweiten Umgehungsabschnitt herumgeführt ist;
wobei auf der der gemeinsamen Elektrodenleitung (104) nahen Seite mindestens einige Enden der Schlitze in dem grünen Subpixelbereich ungleichmäßig sind.

7. Arraysubstrat nach Anspruch 6, wobei eine gemeinsame Elektrode zwischen zwei benachbarten Schlitzen in der Zeilenrichtung eine Streifenelektrode ist;
die Streifenelektrode einen ersten Domänenabschnitt, der sich in einer ersten Richtung erstreckt, einen zweiten Domänenabschnitt, der sich in einer zweiten Richtung erstreckt, und einen Gelenkabschnitt, der zwischen dem ersten Domänenabschnitt und dem zweiten Domänenabschnitt geschaltet ist, umfasst; der Gelenkabschnitt in einer von dem ersten Domänenabschnitt und dem zweiten Domänenabschnitt weg weisenden Richtung vorspringt;
die erste Richtung jeweils die Zeilenrichtung und die Spaltenrichtung kreuzt und die zweite Richtung relativ zu der Zeilenrichtung annähernd symmetrisch zu der ersten Richtung eingestellt ist.

8. Arraysubstrat nach einem der Ansprüche 6 bis 7, ferner umfassend: eine Ausrichtungsschicht, die auf einer dem Basissubstrat (101) abgewandten Seite der Schicht, in der die gemeinsame Elektrode angeordnet ist, angeordnet ist, wobei eine Ausrichtungsrichtung der Ausrichtungsschicht von der zweiten Durchkontaktierung zu der ersten Durchkontaktierung verläuft.

9. Arraysubstrat nach einem der Ansprüche 5 bis 8, das ferner umfasst: eine Vielzahl von ersten Ausrichtungsmarkierungen, die in derselben Schicht wie die Vielzahl von Gate-Leitungen (103) angeordnet sind, wobei die Vielzahl von ersten Ausrichtungsmarkierungen in Zeilenabständen zwischen den grünen Subpixelbereichen und benachbart zu der ersten Elektrode jedes der Transistoren angeordnet ist;
ferner umfassend: eine Vielzahl von zweiten Ausrichtungsmarkierungen, die in derselben Schicht wie die Vielzahl von Datenleitungen (102) angeordnet sind;
wobei die Vielzahl zweiter Ausrichtungsmarkierungen in einer Eins-zu-eins-Entsprechung zu einigen der ersten Ausrichtungsmarkierungen angeordnet ist;
eine orthogonale Projektion der zweiten Ausrichtungsmarkierung auf das Basissubstrat (101) in einer orthogonalen Projektion einer ersten Ausrichtungsmarkierung angeordnet ist, die der zweiten Ausrichtungsmarkierung auf das Basissubstrat (101) entspricht; und
ein Mittelpunkt der orthogonalen Projektion der zweiten Ausrichtungsmarkierung auf das Basissubstrat (101) im Wesentlichen mit einem Mittelpunkt der orthogonalen Projektion der der zweiten Ausrichtungsmarkierung entsprechenden ersten Ausrichtungsmarkierung auf das Basissubstrat (101) zusammenfällt.

10. Arraysubstrat nach Anspruch 9, ferner umfassend:
eine Vielzahl von dritten Ausrichtungsmarkierungen, die in derselben Schicht wie eine aktive Schicht des Transistors angeordnet sind;
wobei die Vielzahl von dritten Ausrichtungsmarkierungen in einer Eins-zu-eins-Entsprechung zu einigen der ersten Ausrichtungsmarkierungen angeordnet sind;
die dritten Ausrichtungsmarkierungen und die zweiten Ausrichtungsmarkierungen jeweils verschiedenen ersten Ausrichtungsmarkierungen entsprechen;
eine orthogonale Projektion der dritten Ausrichtungsmarkierung auf das Basissubstrat (101) in einer orthogonalen Projektion einer der dritten Ausrichtungsmarkierung entsprechenden ersten Ausrichtungsmarkierung auf das Basissubstrat (101) angeordnet ist; und
ein Mittelpunkt der orthogonalen Projektion der dritten Ausrichtungsmarkierung auf das Basissubstrat (101) im Wesentlichen mit einem Mittelpunkt der orthogonalen Projektion der der dritten Ausrichtungsmarkierung entsprechenden ersten Ausrichtungsmarkierung auf das Basissubstrat (101) zusammenfällt;
wobei eine Leitungsbreite der Datenleitung (102) in einem Bereich, in dem der erste Umgehungsabschnitt angeordnet ist, kleiner ist als eine Leitungsbreite der Datenleitung (102) in einem Bereich, in dem der zweite Umgehungsabschnitt angeordnet ist.

11. Anzeigevorrichtung, umfassend ein Arraysubstrat und ein gegenüberliegendes Substrat, die einander gegenüberliegen, und eine zwischen dem Arraysubstrat und dem gegenüberliegenden Substrat angeordnete Flüssigkristallschicht, wobei das Arraysubstrat das Arraysubstrat nach einem der Ansprüche 1 bis 10 ist.

12. Anzeigevorrichtung nach Anspruch 11, wobei das gegenüberliegende Substrat einen Haupt-Foto-Abstandhalter umfasst;
eine orthogonale Projektion eines dem Arraysubstrat nahen Endes des Haupt-Foto-Abstandhalters auf das Basissubstrat (101) in einer orthogonalen Projektion des verbreiterten Abschnitts (1021) auf das Basissubstrat (101) angeordnet ist;
ein Abstand zwischen einer Kante der orthogonalen Projektion des verbreiterten Abschnitts (1021) auf das Basissubstrat (101) und einer Kante der orthogonalen Projektion des dem Arraysubstrat nahen Endes des Haupt-Foto-Abstandhalters auf das Basissubstrat (101) größer oder gleich 5 µm und kleiner oder gleich 10 µm ist;
wobei ein Abstand zwischen einer orthogonalen Projektion des Umgehungsabschnitts auf das Basissubstrat (101) und der orthogonalen Projektion des dem Arraysubstrat nahen Endes des Haupt-Foto-Abstandhalters auf das Basissubstrat (101) größer oder gleich 15 µm und kleiner oder gleich 20 µm ist.

13. Anzeigevorrichtung nach einem der Ansprüche 11 bis 12, wobei das gegenüberliegende Substrat einen Foto-Abstandhalter umfasst; die Datenleitung (102) einen Drahtabschnitt umfasst, dessen orthogonale Projektion sich mit der gemeinsamen Elektrodenleitung (104) überlappt; sich der Drahtabschnitt in einer vorbestimmten Richtung in Bezug auf eine Spaltenrichtung schräg erstreckt; und ein Mittelpunkt einer orthogonalen Projektion eines dem Arraysubstrat auf das Basissubstrat (101) nahen Endes des Foto-Abstandhalters entlang der vorbestimmten Richtung relativ zu einer Symmetrieachse des Drahtabschnitts in einer Erstreckungsrichtung versetzt ist;
wobei das gegenüberliegende Substrat ferner eine Vielzahl von Farbfilterelementen umfasst, wobei jedes der Vielzahl von Farbfilterelementen entsprechend den Subpixelbereichen in jeder Spalte angeordnet ist; und sich die Vielzahl von Farbfilterelementen in einer Zickzackrichtung in Spaltenrichtung erstreckt;
wobei jedes der Vielzahl von Farbfilterelementen eine Vielzahl von konvexen Abschnitten umfasst und die Vielzahl von konvexen Abschnitten Gelenkabschnitten an den Rändern der Subpixelbereiche entsprechen;
wobei jedes der Vielzahl von Farbfilterelementen ferner eine Vielzahl von Biegeabschnitten umfasst und die Vielzahl von Biegeabschnitten zwischen Öffnungsbereichen benachbarter Subpixelbereiche in derselben Spalte angeordnet sind.

14. Verfahren zur Herstellung des Arraysubstrats nach einem der Ansprüche 1 bis 10, umfassend:
Bereitstellen des Basissubstrats (101), wobei das Basissubstrat (101) die Vielzahl von in einem Array angeordneten Subpixelbereichen umfasst; und
Ausbilden der Vielzahl von Datenleitungen (102) in Spaltenabständen der Vielzahl von Subpixelbereichen und Ausbilden der Vielzahl von Gate-Leitungen (103) und der Vielzahl von gemeinsamen Elektrodenleitungen (104) in Zeilenabständen der Vielzahl von Subpixelbereichen;
wobei mindestens ein Teil der Vielzahl von Datenleitungen (102) den verbreiterten Abschnitt (1021) zum Tragen des Foto-Abstandhalters umfasst; und mindestens eine von mindestens einem Teil der Vielzahl von Gate-Leitungen (103) und mindestens einem Teil der Vielzahl von gemeinsamen Elektrodenleitungen (104) einen Umgehungsabschnitt umfasst, der um den verbreiterten Abschnitt (1021) herumgeführt wird.

## Revendications

1. Substrat en réseau, comprenant :
un substrat de base (101), comprenant une pluralité de zones de sous-pixels (SP) agencées en réseau ;
une pluralité de lignes de données (102), disposées au niveau des espaces entre colonnes de la pluralité de zones de sous-pixels (SP), dans laquelle au moins une partie de la pluralité de lignes de données (102) comprend une portion élargie (1021) destinée à supporter un espaceur photosensible ; et
une pluralité de lignes de grille (103) et une pluralité de lignes d'électrodes communes (104), disposées au niveau des espaces entre rangées de la pluralité de zones de sous-pixels (SP) ; dans laquelle la pluralité de lignes de grille (103) et la pluralité de lignes d'électrodes communes (104) sont disposées sur une couche différente de celle de la pluralité de lignes de données (102), au moins une partie de la pluralité de lignes de grille (103) et au moins une partie de la pluralité de lignes d'électrodes communes (104) comprenant une portion d'évitement enroulée autour de la portion élargie (1021) pour éviter la portion élargie (1021) ;
dans lequel ladite au moins une partie de la pluralité de lignes de grille (103) comprend une première portion d'évitement enroulée autour de la portion élargie (1021), et ladite au moins une partie de la pluralité de lignes d'électrodes communes (104) comprend une deuxième portion d'évitement enroulée autour de la portion élargie (1021).

2. Substrat en réseau selon la revendication 1, dans lequel la pluralité de zones de sous-pixels (SP) comprend une pluralité de zones de sous-pixels rouges, une pluralité de zones de sous-pixels verts et une pluralité de zones de sous-pixels bleus ;
dans lequel des colonnes où sont situées les zones de sous-pixels rouges, des colonnes où sont situées les zones de sous-pixels verts et des colonnes où sont situées les zones de sous-pixels bleus sont disposées en cycles alternés dans une direction de rangée, et les lignes de données (102) au niveau des espaces entre colonnes entre les colonnes où sont situées les zones de sous-pixels rouges et les colonnes où sont situées les zones de sous-pixels bleus comprennent la portion élargie (1021).

3. Substrat en réseau selon la revendication 2, dans lequel une projection orthographique de la ligne de grille (103) sur le substrat de base (101) comprend une première limite éloignée d'une projection orthographique de la portion élargie (1021) sur le substrat de base (101) ; et
le substrat en réseau comprend en outre une pluralité d'électrodes de pixels situées dans au moins la pluralité de zones de sous-pixels (SP) ; une projection orthographique de chaque électrode de pixel sur le substrat de base (101) comprend une deuxième limite disposée à proximité de la première limite, et au moins une partie des deuxièmes limites sont approximativement parallèles à une première limite adjacente, respectivement.

4. Substrat en réseau selon la revendication 3, dans lequel une projection orthographique de l'électrode de pixel dans la zone de sous-pixel vert sur le substrat de base (101) ne chevauche pas une projection orthographique de la ligne d'électrode commune (104) sur le substrat de base (101) ;
une projection orthographique de l'électrode de pixel dans la zone de sous-pixel rouge sur le substrat de base (101) et une projection orthographique de l'électrode de pixel dans la zone de sous-pixel bleu sur le substrat de base (101) chevauchent partiellement la projection orthographique de la ligne d'électrode commune (104) sur le substrat de base (101), respectivement ;
dans lequel une aire de la projection orthographique de l'électrode de pixel dans la zone de sous-pixel rouge sur le substrat de base (101) est Sr, une aire de la projection orthographique de l'électrode de pixel dans la zone de sous-pixel vert sur le substrat de base (101) est Sg, une aire de la projection orthographique de l'électrode de pixel dans la zone de sous-pixel bleu sur le substrat de base (101) est Sb, et un rapport de Sg:Sb:Sr est (909_{1687):(930}1727):(946∼1758) ;
dans lequel une différence entre un taux de charge de la zone de sous-pixel rouge et un taux de charge de la zone de sous-pixel vert est supérieure ou égale à 0 et inférieure à 0,003, et un taux de charge de la zone de sous-pixel bleu est approximativement identique au taux de charge de la zone de sous-pixel rouge.

5. Substrat en réseau selon l'une quelconque des revendications 2 à 4, comprenant en outre une pluralité de transistors situés au niveau des espaces entre rangées de la pluralité de zones de sous-pixels ; dans lequel :
une distance entre un transistor situé entre des zones de sous-pixels rouges et un transistor situé entre des zones de sous-pixels verts est d₁ ;
une distance entre un transistor situé entre des zones de sous-pixels verts et un transistor situé entre des zones de sous-pixels bleus est d₂ ; et
une distance entre un transistor situé entre des zones de sous-pixels bleus et un transistor situé entre des zones de sous-pixels rouges est d₃ ;
dans lequel d₂ < d₁ < d₃ ;
dans lequel une forme d'une zone de canal du transistor est en forme de « ligne droite », des porteurs dans la zone de canal du transistor migrent le long d'une direction de rangée, une longueur de la zone de canal du transistor dans la direction de rangée est a ; une partie locale de la ligne de grille (103) est multiplexée en tant qu'électrode de grille du transistor, et une largeur de ligne de l'électrode de grille du transistor dans une direction de colonne est A ; dans lequel a/A est supérieur ou égal à 1/5 et inférieur ou égal à 2/3.

6. Substrat en réseau selon la revendication 5, comprenant en outre :
une électrode commune disposée sur un côté d'une couche où la pluralité d'électrodes de pixels sont situées faisant face à l'opposé du substrat de base (101) ;
une couche de passivation disposée entre la couche où la pluralité d'électrodes de pixels sont situées et une couche où l'électrode commune est située ;
une couche de planarisation disposée entre la couche où la pluralité d'électrodes de pixels sont situées et une couche où la pluralité de lignes de données (102) sont situées ; et
une couche isolante de grille disposée entre la couche où la pluralité de lignes de données (102) sont situées et une couche où la pluralité de lignes de grille (103) sont situées ;
dans lequel l'électrode commune est électriquement connectée à la ligne d'électrode commune (104) à travers un premier trou d'interconnexion pénétrant à travers la couche de passivation, la couche de planarisation et la couche isolante de grille ; une première électrode du transistor est électriquement connectée à l'électrode de pixel à travers un deuxième trou d'interconnexion pénétrant à travers la couche de planarisation ; et dans la direction de colonne, une distance entre le premier trou d'interconnexion et une zone d'ouverture de la zone de sous-pixel est supérieure à une distance entre le deuxième trou d'interconnexion et la zone d'ouverture de la zone de sous-pixel ;
dans lequel l'électrode commune comprend une pluralité de fentes dans la zone de sous-pixel ; et sur un côté proche de la ligne d'électrode commune (104), une extrémité de chacune des fentes dans la zone de sous-pixel rouge et le sous-pixel bleu est enroulée autour de la deuxième portion d'évitement ;
dans lequel, sur le côté proche de la ligne d'électrode commune (104), au moins certaines des extrémités des fentes dans la zone de sous-pixel vert sont inégales.

7. Substrat en réseau selon la revendication 6, dans lequel une électrode commune entre deux fentes adjacentes dans la direction de rangée est une électrode en bande ;
l'électrode en bande comprend une première portion de domaine s'étendant dans une première direction, une deuxième portion de domaine s'étendant dans une deuxième direction, et une portion d'articulation connectée entre la première portion de domaine et la deuxième portion de domaine ; la portion d'articulation fait saillie dans une direction éloignée de la première portion de domaine et de la deuxième portion de domaine ;
la première direction est croisée avec la direction de rangée et la direction de colonne respectivement, et la deuxième direction est disposée approximativement symétriquement avec la première direction par rapport à la direction de rangée.

8. Substrat en réseau selon l'une quelconque des revendications 6 à 7, comprenant en outre : une couche d'alignement disposée sur un côté de la couche où l'électrode commune est située faisant face à l'opposé du substrat de base (101), dans lequel une direction d'orientation de la couche d'alignement va du deuxième trou d'interconnexion au premier trou d'interconnexion.

9. Substrat en réseau selon l'une quelconque des revendications 5 à 8, comprenant en outre : une pluralité de premières marques d'alignement disposées dans la même couche que la pluralité de lignes de grille (103), dans lequel la pluralité de premières marques d'alignement sont disposées au niveau des espaces entre rangées entre les zones de sous-pixels verts et adjacentes à la première électrode de chacun des transistors ;
comprenant en outre : une pluralité de deuxièmes marques d'alignement disposées dans la même couche que la pluralité de lignes de données (102) ;
dans lequel la pluralité de deuxièmes marques d'alignement sont disposées en correspondance biunivoque avec certaines des premières marques d'alignement ;
une projection orthographique de la deuxième marque d'alignement sur le substrat de base (101) est située dans une projection orthographique d'une première marque d'alignement correspondant à la deuxième marque d'alignement sur le substrat de base (101) ; et
un centre de la projection orthographique de la deuxième marque d'alignement sur le substrat de base (101) coïncide sensiblement avec un centre de la projection orthographique de la première marque d'alignement correspondant à la deuxième marque d'alignement sur le substrat de base (101).

10. Substrat en réseau selon la revendication 9, comprenant en outre : une pluralité de troisièmes marques d'alignement disposées dans la même couche qu'une couche active du transistor ;
dans lequel la pluralité de troisièmes marques d'alignement sont disposées en correspondance biunivoque avec certaines des premières marques d'alignement ;
les troisièmes marques d'alignement et les deuxièmes marques d'alignement correspondent à différentes premières marques d'alignement, respectivement ;
une projection orthographique de la troisième marque d'alignement sur le substrat de base (101) est située dans une projection orthographique d'une première marque d'alignement correspondant à la troisième marque d'alignement sur le substrat de base (101) ; et
un centre de la projection orthographique de la troisième marque d'alignement sur le substrat de base (101) coïncide sensiblement avec un centre de la projection orthographique de la première marque d'alignement correspondant à la troisième marque d'alignement sur le substrat de base (101) ;
dans lequel une largeur de ligne de la ligne de données (102) dans une zone où la première portion d'évitement est située est inférieure à une largeur de ligne de la ligne de données (102) dans une zone où la deuxième portion d'évitement est située.

11. Appareil d'affichage, comprenant un substrat en réseau et un substrat opposé l'un en face de l'autre, et une couche de cristaux liquides disposée entre le substrat en réseau et le substrat opposé, dans lequel le substrat en réseau est le substrat en réseau selon l'une quelconque des revendications 1 à 10.

12. Appareil d'affichage selon la revendication 11, dans lequel le substrat opposé comprend un espaceur photographique principal ;
une projection orthographique d'une extrémité de l'espaceur photographique principal proche du substrat en réseau sur le substrat de base (101) est située dans une projection orthographique de la portion élargie (1021) sur le substrat de base (101) ;
une distance entre un bord de la projection orthographique de la portion élargie (1021) sur le substrat de base (101) et un bord de la projection orthographique de l'extrémité de l'espaceur photographique principal proche du substrat en réseau sur le substrat de base (101) est supérieure ou égale à 5 µm et inférieure ou égale à 10 µm ;
dans lequel une distance entre une projection orthographique de la portion d'évitement sur le substrat de base (101) et la projection orthographique de l'extrémité de l'espaceur photographique principal proche du substrat en réseau sur le substrat de base (101) est supérieure ou égale à 15 µm et inférieure ou égale à 20 µm.

13. Appareil d'affichage selon l'une quelconque des revendications 11 à 12, dans lequel le substrat opposé comprend un espaceur photographique ; la ligne de données (102) comprend une portion de fil dont la projection orthographique chevauche la ligne d'électrode commune (104) ; la portion de fil s'étend de manière inclinée dans une direction prédéterminée par rapport à une direction de colonne ; et un centre d'une projection orthographique d'une extrémité de l'espaceur photographique proche du substrat en réseau sur le substrat de base (101) est décalé le long de la direction prédéterminée par rapport à un axe de symétrie de la portion de fil dans une direction d'extension ;
dans lequel le substrat opposé comprend en outre une pluralité de résistances de couleur, chacune de la pluralité de résistances de couleur étant disposée en correspondance avec les zones de sous-pixels dans chaque colonne ; et la pluralité de résistances de couleur s'étendent dans une direction en zigzag dans la direction de colonne ;
dans lequel chacune de la pluralité de résistances de couleur comprend une pluralité de portions convexes, et la pluralité de portions convexes correspondent à des portions d'articulation au niveau des bords des zones de sous-pixels ;
dans lequel chacune de la pluralité de résistances de couleur comprend en outre une pluralité de portions de courbure, et la pluralité de portions de courbure sont disposées entre des zones d'ouverture de zones de sous-pixels adjacentes dans la même colonne.

14. Procédé de fabrication du substrat en réseau selon l'une quelconque des revendications 1 à 10, comprenant :
la fourniture du substrat de base (101), dans lequel le substrat de base (101) comprend la pluralité de zones de sous-pixels disposées en réseau ; et
la formation de la pluralité de lignes de données (102) au niveau des espaces entre colonnes de la pluralité de zones de sous-pixels, et la formation de la pluralité de lignes de grille (103) et de la pluralité de lignes d'électrode commune (104) au niveau des espaces entre rangées de la pluralité de zones de sous-pixels ;
dans lequel au moins une partie de la pluralité de lignes de données (102) comprend la portion élargie (1021) pour supporter l'espaceur photographique ; et au moins l'une d'au moins une partie de la pluralité de lignes de grille (103) et d'au moins une partie de la pluralité de lignes d'électrode commune (104) comprend une portion d'évitement enveloppant la portion élargie (1021).
